# EUROPÄISCHE PATENTANMELDUNG

(11) **EP 3 936 298 A1**
(43) Veröffentlichungstag der Anmeldung: **12.01.2022**
(21) Anmeldenummer: 21184189.5
(22) Anmeldetag: 07.07.2021
(51) Int. Cl.: B29C 33/04, B29C 44/44, B29C 44/34, B29C 44/58, B29C 35/04

(54) **FORMWERKZEUG ZUR HERSTELLUNG EINES PARTIKELSCHAUMFORMTEILS**

(30) Priorität: 09.07.2020 DE 102020118192
(71) Anmelder: FOX Velution GmbH, 96215 Lichtenfels (DE); PARAT Beteiligungs GmbH, 94089 Neureichenau (DE)
(72) Erfinder: LUCHT, Mirjam Martina, 91593 Burgbernheim (DE); VETTER, Jörg, 64839 Münster (Hessen) (DE); KREMSREITER, Martin, 94089 Neureichenau (DE)
(74) Vertreter: Hafner & Kohl PartmbB

(57) **Zusammenfassung**

Formwerkzeug (1) zur Herstellung eines Partikelschaumformteils, umfassend:
- wenigstens ein eine Formwerkzeugkavität (4) des Formwerkzeugs (1) begrenzendes Formwerkzeugelement (2, 3),
- eine Temperiereinrichtung (5) zur Temperierung des wenigstens einen Formwerkzeugelements (2, 3), dadurch gekennzeichnet, dass
die Temperiereinrichtung (5) eine Strömungskanalanordnung umfasst, welche wenigstens ein sich, insbesondere durch einen Umformvorgang, vordefiniert konfiguriert in wenigstens einer Raumrichtung und/oder Raumebene erstreckendes, einen von einem Strömungsfluid durchströmbaren Strömungskanal (5.2) begrenzendes Strömungskanalelement (5.1) umfasst, wobei das wenigstens eine Strömungskanalelement (5.1) zumindest abschnittsweise, gegebenenfalls vollständig, in einem Trägerkörper (5.3) angeordnet ist.

## Beschreibung

Die Erfindung betrifft ein Formwerkzeug zur Herstellung eines Partikelschaumformteils, umfassend wenigstens ein eine Formwerkzeugkavität des Formwerkzeugs begrenzendes Formwerkzeugelement sowie eine Temperiereinrichtung zur Temperierung des wenigstens einen Formwerkzeugelements.

Entsprechende Formwerkzeuge zur Herstellung von Partikelschaumformteilen sind aus dem technischen Gebiert der Verarbeitung von expandierbaren oder expandierten Kunststoffpartikelmaterialien in einer Vielzahl unterschiedlicher Ausführungen dem Grunde nach bekannt und umfassen typischerweise ein oder mehrere Formwerkzeugelemente, welche eine Formwerkzeugkavität begrenzen bzw. definieren, welche im Betrieb des Formwerkzeugs zur Herstellung eines entsprechenden Partikelschaumformteils mit einem zu verarbeitenden expandierbaren oder expandierten Kunststoffpartikelmaterial befüllbar bzw. befüllt ist.

Da die Verarbeitung eines entsprechenden expandierbaren oder expandierten Kunststoffpartikelmaterials zur Herstellung eines entsprechenden Partikelschaumformteils typischerweise die Einbringung von thermischer Energie in das Kunststoffpartikelmaterial erfordert, umfassen entsprechende Formwerkzeuge typischerweise Temperiereinrichtungen zur Temperierung des wenigstens einen Formwerkzeugelements.

Entsprechende Temperiereinrichtungen umfassen regelmäßig ein oder mehrere von einem Strömungsfluid durchströmbare Strömungskanäle, welche in sowohl technisch als auch wirtschaftlich vergleichsweise aufwändiger Weise etwa durch spanende Bearbeitung (z. B. Bohren oder Fräsen) der Formwerkzeugelemente oder durch einen additiven Aufbau der Formwerkzeugelemente ausgebildet werden. Bisweilen weisen entsprechende Strömungskanale, z. B. aufgrund von Undichtigkeiten der Medienführung, oder deren Anschlüsse an Temperiergeräte (oft als Mischmaterialverbunde realisiert) Probleme im Hinblick auf ihre langzeitige Betriebssicherheit, insbesondere bei variothermer Prozessführung, auf.

Mithin besteht ein Bedarf nach einem sowohl technisch als auch wirtschaftlich effizienteren, jedoch gleichwohl zuverlässigen Ansatz zur Ausbildung entsprechender Temperiereinrichtungen in entsprechenden Formwerkzeugen.

Der Erfindung liegt die Aufgabe zugrunde, ein demgegenüber verbessertes Formwerkzeug zur Herstellung eines Partikelschaumformteils anzugeben.

Die Aufgabe wird durch die Gegenstände der unabhängigen Ansprüche, d. h. insbesondere ein Formwerkzeug gemäß dem unabhängigen Anspruch 1, gelöst. Die hierzu abhängigen Ansprüche betreffen mögliche Ausführungsformen der Gegenstände der unabhängigen Ansprüche.

Ein erster Aspekt der Erfindung betrifft ein Formwerkzeug zur Herstellung eines Partikelschaumformteils. Das Formwerkzeug ist sonach im Allgemeinen zur Verarbeitung von expandierbarem oder expandiertem Kunststoffpartikelmaterial (nachfolgend kurz als "Kunststoffpartikelmaterial" bezeichnet) zur Herstellung eines, insbesondere dickwandigen und/oder geometrisch komplexen und/oder großvolumigen, Partikelschaumformteils eingerichtet.

Das vermittels des Formwerkzeugs verarbeitbare Kunststoffpartikelmaterial weist vor seiner Verarbeitung typischerweise eine partikuläre Struktur auf. Bei dem Kunststoffpartikelmaterial bzw. entsprechenden Partikeln kann es sich um ein noch nicht expandiertes Kunststoffpartikelmaterial bzw. noch nicht expandierte Partikel, um ein vorexpandiertes Kunststoffpartikelmaterial bzw. vorexpandierte Partikel oder um ein vollständig expandiertes Kunststoffpartikelmaterial bzw. vollständig expandierte Partikel handeln. Für ein noch nicht expandiertes Kunststoffpartikelmaterial bzw. entsprechende Partikel wie auch für ein vorexpandiertes Kunststoffpartikelmaterial bzw. entsprechende Partikel gilt, dass diese(s) typischerweise expandierbar ist bzw. sind, d. h. in einem Expansionsvorgang (weiter) expandiert werden können. Für ein vollständig expandiertes Kunststoffpartikelmaterial bzw. entsprechende Partikel gilt, dass diese(s) typischerweise nicht mehr (weiter) expandiert werden kann bzw. können. Das hierin beschriebene Formwerkzeug ist insbesondere zur rein konduktiven oder kombiniert konduktiv-konvektiven, bevorzugt dampffreien bzw. dampflosen, Verarbeitung aller Formen von Kunststoffpartikelmaterial bzw. entsprechenden Partikeln eingerichtet. Konkrete Beispiele für vermittels des Formwerkzeugs verarbeitbare Kunststoffpartikelmaterialien sind in nicht abschließender Aufzählung expandierbare bzw. expandierte Polyolefine, wie z. B. expandierbares bzw. expandiertes Polyethylen, expandierbares bzw. expandiertes Polypropylen, oder expandierbare bzw. expandierte Polystyrole oder andere expandierbare bzw. expandierte amorphe Thermoplaste, wie z. B. E-PC, oder expandierbare bzw. expandierte technische Thermoplaste, wie z. B. E-PA, E-PBT oder E-PET.

Wie weiter oben angedeutet wurde, kann das Formwerkzeug insbesondere zur Herstellung bzw. dickwandiger und/oder geometrisch komplexer und/oder bzw. großvolumiger Partikelschaumformteile eingerichtet sein. Dabei handelt es sich insbesondere um solche Partikelschaumformteile, mit einer räumlichen Ausdehnung in wenigstens einer Raumrichtung von mehreren Zentimetern bzw. mehreren Dezimetern, d. h. insbesondere einer Wandstärke von mehreren Zentimetern bzw. mehreren Dezimetern. Ein vermittels des Formwerkzeugs herstellbares Partikelschaumformteil kann sonach z. B. eine Höhe und/oder Breite und/oder Tiefe von mehreren Zentimetern bzw. mehreren Dezimetern aufweisen.

Das Formwerkzeug umfasst wenigstens ein Formwerkzeugelement. Das wenigstens eine Formwerkzeugelement kann gegebenenfalls auch als Formwerkzeugwandung oder als Formwerkzeugwandungsabschnitt bezeichnet bzw. erachtet werden. Das wenigstens eine Formwerkzeugelement begrenzt bzw. definiert wenigstens eine Formwerkzeugkavität zumindest abschnittsweise. Typischerweise umfasst das Formwerkzeug mehrere, gegebenenfalls auch als Formwerkzeughälften zu bezeichnende bzw. zu erachtende, Formwerkzeugelemente, welche gemeinsam die wenigstens eine Formwerkzeugkavität begrenzen bzw. definieren. Sofern das Formwerkzeug mehrere Formwerkzeugelemente umfasst, kann wenigstens ein Formwerkzeugelement relativ zu wenigstens einem anderen Formwerkzeugelement bewegbar gelagert sein. Derart kann eine Offenstellung des Formwerkzeugs realisiert werden, in welcher, z. B. zum Zwecke der Entnahme eines hergestellten Partikelschaumformteils, eine Zugangsmöglichkeit in die Formwerkzeugkavität gegeben ist, und eine Schließstellung des Formwerkzeugs realisiert werden, in welcher - abgesehen von etwaig erforderlichen kleineren erforderlichen Öffnungen zur Befüllung, Entlüftung o. ä. - keine Zugangsmöglichkeit in die Formwerkzeugkavität gegeben ist.

Ein Formwerkzeugelement weist typischerweise zumindest abschnittsweise, gegebenenfalls vollständig, eine plattenartige- bzw. förmige Grundform auf. Denkbar ist ferner, dass ein entsprechendes Formwerkzeugelement eine schalenartige bzw. -förmige oder membranartige bzw. -förmige Grundform aufweist. Denkbar ist es jedoch auch, dass ein entsprechendes Formwerkzeugelement zumindest abschnittsweise, gegebenenfalls vollständig, eine längliche, sich, insbesondere fingerartig, in die wenigstens eine Formwerkzeugkavität erstreckende Grundform aufweist. Insbesondere sind auch Kombinationen unterschiedlicher Formwerkzeugelemente denkbar, sodass z. B. ein erstes Formwerkzeugelement zumindest abschnittsweise, gegebenenfalls vollständig, eine platten-, schalen- oder membranartige- bzw. -förmige Grundform und ein weiteres Formwerkzeugelement eine längliche, sich, insbesondere fingerartig, in die wenigstens eine Formwerkzeugkavität erstreckende Grundform aufweist.

Das Formwerkzeug umfasst weiterhin wenigstens eine Temperiereinrichtung zum Temperieren, d. h. insbesondere zum Aufheizen und/oder Abkühlen, des wenigstens einen Formwerkzeugelements. Das Temperieren des wenigstens einen Formwerkzeugelements erfolgt typischerweise im Zusammenhang mit der Durchführung einer Maßnahme zum Verarbeiten von Kunststoffpartikelmaterial zur Herstellung eines Partikelschaumformteils. Insbesondere erfolgt das Temperieren des wenigstens einen Formwerkzeugelements im Zusammenhang mit der Durchführung einer Maßnahme zum Verbinden von in die wenigstens eine Formwerkzeugkavität eingefülltem Kunststoffpartikelmaterial. Das Temperieren des wenigstens einen Formwerkzeugelements kann daher ein Einbringen von thermischer Energie in ein in die wenigstens eine Formwerkzeugkavität eingefülltes Kunststoffpartikelmaterial bewirken, welches wiederum ein, gegebenenfalls mit einer Expansion des Kunststoffpartikelmaterials einhergehenden, Verbinden des in die wenigstens eine Formwerkzeugkavität eingefüllten Kunststoffpartikelmaterials unter Ausbildung eines herzustellenden Partikelschaumformteils bewirkt. Das wenigstens eine Formwerkzeugelement kann sonach wenigstens eine thermische Wirkfläche umfassen, über welche, z. B. zum Zwecke des Aufheizens und/oder Abkühlens, ein Austausch von thermischer Energie mit einem in der wenigstens einen Formwerkzeugkavität befindlichen Kunststoffpartikelmaterial oder Partikelschaumformteil erfolgen kann. Eine entsprechende thermische Wirkfläche ist typischerweise eine Fläche des wenigstens einen Formwerkzeugelements, welche die wenigstens eine Formwerkzeugkavität direkt begrenzt, d. h. der wenigstens einen Formwerkzeugkavität direkt zugewandt ist.

Im Zusammenhang mit der Einbringung und bzw. oder der Abfuhr von thermischer Energie in bzw. aus dem in die wenigstens eine Formwerkzeugkavität eingefüllten Kunststoffpartikelmaterial gilt, dass dies insbesondere dampffrei bzw. dampflos und somit (im Wesentlichen) konduktionsbasiert oder kombiniert konduktiv-konvektiv erfolgen kann. Mithin kann das Formwerkzeug zur dampffreien bzw. dampflosen und somit rein konduktiven bzw. kombiniert konduktiv-konvektiven Verarbeitung von Kunststoffpartikelmaterialien zur Herstellung von Partikelschaumformteilen eingerichtet sein.

Die Temperiereinrichtung umfasst eine Strömungskanalanordnung, welche wenigstens ein sich, insbesondere durch einen Umformvorgang, in wenigstens einer Raumrichtung und/oder Raumebene erstreckendes Strömungskanalelement umfasst. Das wenigstens eine Strömungskanalelement begrenzt einen von einem Strömungsfluid, d. h. z. B. einem, gegebenenfalls druckbeaufschlagten, Gas und/oder einer Flüssigkeit, durchströmbaren Strömungskanal. Die Temperiereinrichtung umfasst damit wenigstens ein Strömungskanalelement, welches ein sich ein- oder mehrdimensional erstreckendes rohrartiges bzw. -förmiges Gebilde darstellt, welches wenigstens einen als von einem Strömungsfluid durchströmbaren Strömungskanal nutzbaren Hohlraum begrenzt.

Das wenigstens eine Strömungskanalelement weist eine vordefiniert konfigurierte sich in wenigstens einer Raumrichtung und damit, wie erwähnt, auch in wenigstens einer Raumebene erstreckende ein- oder mehrdimensionale Raumform auf. Die vordefiniert konfigurierte räumliche Erstreckung des wenigstens einen Strömungskanalelements resultiert typischerweise aus wenigstens einem Umformvorgang, d. h. insbesondere einem Biegevorgang, eines rohrartigen bzw. -förmigen Halbzeugs, welches unter Ausbildung eines entsprechenden sich vordefiniert konfiguriert in wenigstens einer Raumrichtung und/oder Raumebene erstreckenden Strömungskanalelements von einer ursprünglichen Konfiguration in eine gewünschte Zielgeometrie bzw. - konfiguration umgeformt ist bzw. wird, sodass es ein als vordefiniert konfiguriertes Strömungskanalelement einer entsprechenden Strömungskanalanordnung verwendbares räumlich-körperliches Gebilde bildet. Die Zielgeometrie bzw. -konfiguration des wenigstens einen Strömungskanalelements wird typischerweise im Hinblick auf gewünschte thermische Eigenschaften, wie z. B. gewünschte thermische Wechselwirkungseigenschaften, d. h. z. B. Leitung, Ausdehnung oder Kapazität, mit einem das wenigstens eine Strömungskanalelement umgebenden Trägerkörper, und/oder gewünschte strukturelle Eigenschaften, wie z. B. gewünschte mechanische Eigenschaften, wie z. B. eine gewünschte Steifigkeit oder Innendruckfestigkeit) und bzw. oder Oberflächeneigenschaften, wie z. B. Rauhheit oder Beschichtung, gewählt. Das wenigstens eine Strömungskanalelement kann sonach ein oder mehrere Umformbereiche, d. h. insbesondere Biegebereiche, umfassen, an welchen sich die räumliche Erstreckung des wenigstens einen Strömungskanalelements bzw. wenigstens eines Strömungskanalelementabschnitts ändert. Das wenigstens eine Strömungskanalelement kann sonach einen sich in einer ersten Raumrichtung und/oder Raumebene erstreckenden ersten Strömungskanalelementabschnitt und wenigstens einen sich in einer weiteren Raumrichtung und/oder Raumebene erstreckenden weiteren Strömungskanalelementabschnitt umfassen. Derart können z. B. ein- oder mehrdimensionale mäanderartige bzw. -förmige und/oder spiralartige bzw. -förmige Konfigurationen des wenigstens einen Strömungskanalelements in einen oder mehreren Raumrichtungen und/oder Raumebenen realisiert werden.

Das wenigstens eine Strömungskanalelement ist typischerweise zumindest abschnittsweise, gegebenenfalls vollständig, in einem z. B. aus einem gießfähigen Material, d. h. z. B. einem Vergussmaterial, gebildeten Trägerkörper angeordnet. Das wenigstens eine Strömungskanalelement ist sonach zumindest abschnittsweise, gegebenenfalls vollständig, von dem Trägerkörper umgeben bzw. umschlossen und damit zumindest abschnittsweise, gegebenenfalls vollständig, in einen Trägerkörper eingebettet. Insbesondere ist das wenigstens eine Strömungskanalelement zumindest abschnittsweise, gegebenenfalls vollständig, direkt von dem Trägerkörper umgeben bzw. umschlossen und damit zumindest abschnittsweise, gegebenenfalls vollständig, direkt in einen Trägerkörper eingebettet. Dies kann insbesondere durch einen Verguss des wenigstens einen Strömungskanalelements durch ein den Trägerkörper bildendes gießfähiges Material, d. h. insbesondere ein Vergussmaterial, erfolgen. Alternativ wäre eine Anordnung des wenigstens einen Strömungskanalelements in wenigstens einem vorgeformten Trägerkörper möglich; denkbar wäre z. B. eine Anordnung des wenigstens einen Strömungskanalelements zwischen zwei, gegebenenfalls mit z. B. durch Ausfräsen, Ablation, Erodieren, etc., gebildeten, Aufnahmebereichen versehenen Trägerkörperplatten, welche z. B. form- und/oder kraft- und/oder stoffschlüssig, miteinander verbunden sind. Lediglich beispielhaft wird in diesem Zusammenhang auf Pressen, Klemmen, Schrauben, Stecken, Kleben, Löten, Schweißen, verwiesen.

Zwischen dem Trägerkörper und dem von diesem umgebenen bzw. umschlossenen wenigstens einen Strömungskanalelement besteht in allen Ausführungsformen ein thermisch leitfähiger Kontakt, sodass thermische Energie eines das wenigstens einen Strömungskanalelement durchströmenden Strömungsfluids, d. h. z. B. ein Heizfluid, über die Wandungen des wenigstens einen Strömungskanalelements auf den Trägerkörper übertragen werden kann. Derart kann z. B. ein Aufheizen des Trägerkörpers und somit eine Aufheizwirkung der Temperiereinrichtung realisiert werden. Umgekehrt kann thermische Energie aus dem Trägerkörper über die Wandungen des wenigstens einen Strömungskanalelements auf ein das wenigstens eine Strömungskanalelement durchströmendes Strömungsfluid, d. h. z. B. ein Kühlfluid, übertragen werden. Derart kann z. B. ein Abkühlen des Trägerkörpers und somit eine Abkühlwirkung der Temperiereinrichtung realisiert werden.

Das den Trägerkörper bildende Material bzw. der Trägerkörper weist sonach typischerweise thermisch leitfähige Eigenschaften auf, sodass sich über den Trägerkörper thermische Energie übertragen lässt. Gleiches gilt für das das wenigstens Strömungskanalelement bildende Material.

Um eine möglichst effiziente Wärmeübertragung von dem Trägerkörper zu realisieren, kann das wenigstens eine Strömungskanalelement zumindest abschnittsweise, gegebenenfalls vollständig, oberflächen- bzw. konturnah parallel zu einer Oberfläche des Trägerkörpers angeordnet sein. Eine entsprechende Oberfläche des Trägerkörpers bildet sodann typischerweise eine entsprechende Kontur- und/oder Wirkfläche des Trägerkörpers bzw. der Temperiereinrichtung. Das wenigstens eine Strömungskanalelement kann sonach, insbesondere direkt, unterhalb einer Kontur- und/oder Wirkfläche des Trägerkörpers bzw. der Temperiereinrichtung angeordnet sein.

Die Temperiereinrichtung ist sonach durch zumindest abschnittsweises, gegebenenfalls vollständiges, Einbringen einer wenigstens ein vordefiniert konfiguriertes Strömungskanalelement umfassenden Strömungskanalanordnung in ein einen Trägerkörper bildendes Material gebildet. Die Temperiereinrichtung kann konkret durch Umgießen bzw. Vergießen einer wenigstens ein vordefiniert konfiguriertes Strömungskanalelement umfassenden Strömungskanalanordnung mit einem aushärtbaren bzw. gießfähigen Material und Aushärten bzw. Erstarren des aushärtbaren bzw. gießfähigen Materials gebildet werden. Es handelt sich hierbei um eine besonders einfache Art der Herstellung einer entsprechenden Temperiereinrichtung, welche höchsten Anforderungen an Wärmeübertragung und, insbesondere weil es sich bei entsprechenden Strömungskanalelementen typischerweise um, abgesehen von Zuströmabschnitten und Ausströmabschnitten, vollständig geschlossene, langzeitig druckdichte Körper handelt, Zuverlässigkeit genügt. Darüber hinaus ist durch eine Konturanpassung des wenigstens einen Strömungskanalelements respektive der Strömungskanalanordnung und damit der Temperiereinrichtung ein energieeffizienter Betrieb auf Grund geringer variothermer Volumina bzw. Massen möglich.

Die Konfiguration der Temperiereinrichtung erlaubt sonach typischerweise eine funktionelle Trennung von einerseits dem Durchströmen mit einem Temperierfluid, welche Funktion von der Strömungskanalanordnung übernommen wird, und andererseits der Übertragung von thermischer Energie, insbesondere auf ein in die wenigstens eine Formwerkzeugkavität eingefülltes Kunststoffpartikelmaterial, welche Funktion (neben der Formgebung) von dem Trägerkörper übernommen wird.

Insgesamt liegt damit ein verbessertes Formwerkzeug zur Herstellung eines Partikelschaumformteils vor.

Dass das wenigstens eine Strömungskanalelement ein sich ein- oder mehrdimensional erstreckendes rohrartiges bzw. -förmiges Gebilde darstellt, wurde bereits erwähnt. Das wenigstens eine Strömungskanalelement kann sich sonach in einer oder mehreren Raumrichtungen und/oder in einer oder mehreren Raumebenen in dem Trägerkörper bzw. durch den Trägerkörper erstrecken. Für das Beispiel eines plattenartigen bzw. -förmigen respektive quaderartigen bzw. - förmigen Trägerkörpers kann sich das wenigstens eine Strömungskanalelement sonach zumindest abschnittsweise in einer oder mehreren Raumrichtungen in der Haupterstreckungsebene des Trägerkörpers oder einer hierzu parallelen Ebenen und zumindest abschnittsweise in einer zur Haupterstreckungsebene des Trägerkörpers winklig, d. h. z. B. rechtwinklig, ausgerichteten Ebene erstrecken. Derart können z. B. die bereits beispielhaft erwähnten ein- oder mehrdimensionalen mäanderartigen bzw. -förmigen und/oder spiralartigen bzw. - förmigen Konfigurationen des wenigstens einen Strömungskanalelements in einer oder mehreren Raumrichtungen bzw. -ebenen realisiert werden. Analoges gilt für Trägerkörper mit anderen als plattenartigen bzw. -förmig respektive quaderartigen bzw. -förmigen Geometrien.

Das wenigstens eine Strömungskanalelement kann, grundsätzlich unabhängig von seiner konkreten räumlichen Erstreckung in dem Trägerkörper, so angeordnet und/oder ausgerichtet sein, dass eine (weitgehend) homogene (flächige) Temperierung des Trägerkörpers möglich ist. Dies kann z. B. durch eine gezielte Beabstandung eines Strömungskanalelements oder eines Strömungskanalelementabschnitts von freiliegenden Wandungsflächen des Trägerkörpers, d. h. z. B. einer die Formwerkzeugkavität begrenzenden und dieser entsprechend zugewandten freiliegenden Wandungsfläche und einer die Formwerkzeugkavität nicht begrenzenden und dieser entsprechend abgewandten freiliegenden Wandungsfläche, und/oder zu jeweils (unmittelbar) benachbart angeordneten weiteren Strömungskanalelementen realisiert sein.

In einer zweckmäßigen Anordnung kann der Abstand der Symmetrie- oder Zentralachse eines Strömungskanalelements oder eines Strömungskanalelementabschnitts zu einer die Formwerkzeugkavität begrenzenden und dieser entsprechend zugewandten freiliegenden Wandungsfläche dem halben Abstand zu einer Symmetrie- oder Zentralachse eines unmittelbar benachbarten Strömungskanalelements oder eines Strömungskanalelementabschnitts sein. Gleichermaßen kann der Abstand der Symmetrie- oder Zentralachse des oder eines Strömungskanalelements oder des oder eines Strömungskanalelementabschnitts zu einer die Formwerkzeugkavität nicht begrenzenden und dieser entsprechend abgewandten freiliegenden Wandungsfläche dem halben Abstand zu einer Symmetrie- oder Zentralachse eines unmittelbar benachbarten Strömungskanalelements oder eines Strömungskanalelementabschnitts sein.

Der Trägerkörper kann ferner, insbesondere auf einer der Formwerkzeugkavität abgewandten Fläche, zumindest abschnittsweise mit Ausgleichs- bzw. Homogenisierungsstrukturen versehen sein, welche eingerichtet sind, insbesondere im Hinblick auf eine gegebene räumliche Erstreckung des wenigstens einen Strömungskanalelements in dem Trägerkörper, eine gezielte Zuführung und/oder Abführung von thermischer Energie, d. h. gegebenenfalls auch - insbesondere im Bereich einer der wenigstens einen Formwerkzeugkavität zugewandten Fläche des Trägerkörpers - eine gezielte Ausbreitung bzw. Verteilung, von thermischer Energie in dem Trägerkörper, insbesondere auf einer der wenigstens einen Formwerkzeugkavität zugewandten Fläche des Trägerkörpers, zu ermöglichen. Derart lässt sich, insbesondere im Bereich der der wenigstens einen Formwerkzeugkavität zugewandten Fläche des Trägerkörpers, eine homogene Temperaturverteilung in dem Trägerkörper realisieren. Insbesondere lässt sich, derart, insbesondere im Bereich der der wenigstens einen Formwerkzeugkavität zugewandten Fläche des Trägerkörpers, eine örtlich und/oder zeitlich homogene Temperaturverteilung in dem Trägerkörper und somit, insbesondere im Bereich der der wenigstens einen Formwerkzeugkavität zugewandten Fläche des Trägerkörpers, eine möglichst homogene Temperierung des Trägerkörpers realisieren. Entsprechende Ausgleichs- bzw. Homogenisierungsstrukturen können etwa durch, z. B. querschnittserweiternde, Materialverstärkungen und/oder durch, z. B. querschnittsreduzierende, Materialreduzierungen in dem Trägerkörper ausgebildet sein.

Entsprechende Ausgleichs- bzw. Homogenisierungsstrukturen können dabei in regelmäßiger oder unregelmäßiger Anordnung ausgebildet sein. Ein Beispiel für eine regelmäßige Anordnung ist eine wellenartig, d. h. insbesondere sinusartig- bzw. förmig oder oder sägezahnartig bzw. -förmig respektive zickzackartig bzw. - förmig, ausgebildete Ausgleichs- bzw. Homogenisierungsstruktur. Dabei können die z. B. durch Materialverstärkungen gebildeten Maxima einer entsprechend wellenartig ausgebildeten Ausgleichs- bzw. Homogenisierungsstruktur oberhalb jeweiliger Strömungskanalelemente oder Strömungskanalelementabschnitte angeordnet sein. Die z. B. durch Materialreduzierungen gebildeten Minima einer entsprechend wellenartig ausgebildeten Ausgleichs- bzw. Homogenisierungsstruktur können zwischen jeweiligen Strömungskanalelementen oder Strömungskanalelementabschnitten angeordnet sein.

Entsprechende Ausgleichs- bzw. Homogenisierungsstrukturen können in allen Ausführungsformen insbesondere im Bereich einer der wenigstens einen Formwerkzeugkavität abgewandten Fläche des Trägerkörpers angeordnet oder ausgebildet sein. Derart können etwaige ungleichmäßige Temperaturverteilungen im Bereich einer der wenigstens einen Formwerkzeugkavität zugewandten Fläche des Trägerkörpers zumindest teilweise kompensiert werden.

Dass das wenigstens eine Strömungskanalelement wenigstens einen als Strömungskanal nutzbaren Hohlraum begrenzt, wurde bereits erwähnt. Das wenigstens eine Strömungskanalelement kann sonach als ein in wenigstens eine Raumrichtung vordefiniert konfiguriert gebogenes Rohr- oder Schlauchelement ausgebildet sein oder ein solches umfassen. Insbesondere kann das wenigstens eine Strömungskanalelement aus einem Metallrohr, insbesondere einem Metallrohr aus einem Eisen-basierten metallischen Werkstoff, vorzugsweise Stahl bzw. Edelstahl, oder einem Kunststoffrohr, insbesondere einem Kunststoffrohr aus PA oder PVC, gebildet sein. Metallrohre, d. h. insbesondere Stahlrohre bzw. Edelstahlrohre, sind dabei aufgrund ihrer besonderen thermischen wie auch strukturellen Eigenschaften besonders zweckmäßig; insbesondere sind Metallrohre aufgrund ihrer Duktilität gut umformbar, sodass sich diese in sich ein- oder mehrdimensional erstreckende räumliche Gebilde umformen lassen.

Das wenigstens eine Strömungskanalelement kann, insbesondere im Bereich eines freien Endes, wenigstens einen Ausströmabschnitt oder -bereich umfassen, über welchen ein Strömungsfluid aus dem durch das wenigstens eine Strömungskanalelement begrenzten Strömungskanal austreten kann, und/oder wenigstens einen Zuströmabschnitt oder -bereich umfassen, über welchen ein Strömungsfluid in den durch das wenigstens eine Strömungskanalelement begrenzten Strömungskanal eintreten kann. An oder in einem entsprechenden Ausströmabschnitt oder -bereich und/oder an oder in einem entsprechenden Zuströmabschnitt oder -bereich kann eine, insbesondere flanschartige oder - förmige, Schnittstelle zum Anschluss einer Strömungsfluidversorgungsleitung angeordnet oder ausgebildet sein. Eine entsprechende Schnittstelle ermöglicht typischerweise eine strömungstechnische Verbindung des wenigstens einen Strömungskanalelements mit einer Strömungsfluidversorgung.

Insbesondere kann wenigstens eine Strömungskanalelement, insbesondere im Bereich eines ersten freien Endes, wenigstens einen Ausströmabschnitt oder - bereich umfassen, über welchen ein Strömungsfluid aus dem durch das wenigstens eine Strömungskanalelement begrenzten Strömungskanal austreten kann, und, insbesondere im Bereich eines zweiten freien Endes, wenigstens einen Zuströmabschnitt oder -bereich umfassen, über welchen ein Strömungsfluid in den durch das wenigstens eine Strömungskanalelement begrenzten Strömungskanal eintreten kann, wobei der wenigstens eine Ausströmabschnitt und der wenigstens eine Zuströmabschnitt an gleichen oder unterschiedlichen Seiten des wenigstens einen Formwerkzeugelements angeordnet oder ausgebildet sind. Eine Anordnung des wenigstens einen Ausströmabschnitts oder -bereichs und des wenigstens eine Zuströmabschnitts oder -bereichs an gleichen Seiten des wenigstens einen Formwerkzeugelements ist typischerweise im Hinblick auf einen möglichst einfachen Anschluss des wenigstens einen Strömungskanalelements an eine Strömungsfluidversorgung zweckmäßig.

Ein entsprechender Ausströmabschnitt oder -bereich und/oder ein entsprechender Zuströmabschnitt oder -bereich kann an einem sich außerhalb oder innerhalb des Trägerkörpers erstreckenden Abschnitt des wenigstens einen Strömungskanalelements angeordnet oder ausgebildet sein. Ein entsprechender Ausströmabschnitt oder -bereich kann sonach außerhalb oder innerhalb des Trägerkörpers liegen. Eine außerhalb des Trägerkörpers liegende Anordnung bzw. Ausbildung ist typischerweise ebenso im Hinblick auf einen möglichst einfachen Anschluss des wenigstens einen Strömungskanalelements an eine Strömungsfluidversorgung zweckmäßig.

Dass das den Trägerkörper bildende Material bzw. der Trägerkörper typischerweise thermisch leitfähige Eigenschaften aufweist, sodass sich über den Trägerkörper thermische Energie übertragen lässt, wurde bereits erwähnt. Der Trägerkörper ist sonach typischerweise aus einem thermisch leitfähigen Material bzw. einem thermisch leitfähigen Vergussmaterial gebildet oder umfasst wenigstens ein solches.

Insbesondere kann der Trägerkörper aus einem Metall, insbesondere Leichtmetall, vorzugsweise Aluminium oder Kupfer, gebildet sein. Metalle zeichnen sich neben besonderen thermischen Eigenschaften auch durch besondere strukturelle Eigenschaften, d. h. insbesondere eine besondere mechanische Stabilität, sowie typischerweise eine gewisse Verformbarkeit und Zerspanbarkeit aus. Die Verwendung von Aluminium oder Kupfer ist besonders zweckmäßig, als sich Aluminium oder Kupfer zusätzlich zu den vorgenannten Vorteilen von Metallen z. B. durch eine geringe Anfälligkeit für Korrosion, eine hervorragende elektrische und thermische Leitfähigkeit und eine vergleichsweise niedrige Verarbeitungstemperatur, d. h. insbesondere eine, gegebenenfalls im Vergleich zu dem wenigstens einen Strömungskanalelement, sofern dieses aus (Edel-)Stahl gebildet ist, vergleichsweise niedrige Schmelztemperatur, auszeichnet. Ein weiterer besonderer Vorteil von Aluminium oder Kupfer ist seine Gießfähigkeit und damit die Verarbeitbarkeit in einem Gießverfahren, in welchem eine entsprechende Strömungskanalanordnung mit einer gießfähigen Aluminium- oder Kupferschmelze unter Ausbildung der Temperiereinrichtung vergossen wird.

Sofern der Trägerkörper aus einem Kunststoff gebildet ist, kann der Kunststoff ein mit thermisch leitfähigen Partikeln, vorzugsweise mineralischen Füllstoffen oder Metallpartikeln, versetzter Kunststoff sein. Als Kunststoff kommen z. B. thermoplastische oder duroplastische Kunststoffe in Frage. Es ist sonach denkbar, dass eine entsprechende Strömungskanalanordnung mit einer gießfähigen, gegebenenfalls einer extrusions- oder spritzgießfähigen, Kunststoffmasse unter Ausbildung der Temperiereinrichtung umgossen, gegebenenfalls umspritzt, wird.

Im Rahmen der vorliegenden Offenbarung beinhaltet der Begriff "Metall" grundsätzlich einerseits Reinmetalle, d. h. Metalle aus einem chemischen Element, als auch Metalllegierungen, d. h. Metalle aus unterschiedlichen chemischen Elementen. Analoges gilt für die Benennung konkreter Metalle, sodass z. B. der Begriff "Aluminium" entsprechend auch Aluminiumlegierungen und der Begriff "Kupfer" entsprechend auch Kupferlegierungen, wie z. B. Messing, beinhaltet.

Es ist in allen Ausführungsformen denkbar, dass das wenigstens eine Strömungskanalelement entlang seiner Erstreckung eine unveränderliche bzw. unveränderte oder veränderliche bzw. veränderte Querschnittsgeometrie aufweist. Durch eine unveränderliche bzw. unveränderte Querschnittsgeometrie kann eine weitgehend homogene Strömungseigenschaften, d. h. z. B. weitgehend homogene Strömungsprofile, Strömungsgeschwindigkeiten, etc., erzeugt werden, was sich gegebenenfalls positiv auf eine gewünschte Wärmeübertragung von einem Strömungsfluid auf das Strömungskanalelement und weiter auf den Trägerkörper auswirkt. Durch eine veränderliche bzw. veränderte Querschnittsgeometrie können unterschiedliche Strömungseigenschaften, d. h. z. B. unterschiedliche Strömungsprofile, Strömungsgeschwindigkeiten, etc., erzeugt werden, was sich gegebenenfalls positiv auf eine gewünschte, lokal gezielt unterschiedliche Wärmeübertragung von einem Strömungsfluid auf das Strömungskanalelement und weiter auf den Trägerkörper auswirkt.

Ferner ist es in allen Ausführungsformen denkbar, dass das wenigstens eine Strömungskanalelement im Bereich seiner den wenigstens einen Strömungskanal begrenzenden Wandungen mit einer bestimmten Oberflächenstrukturierung oder -beschichtung versehen ist, welche z. B. in besonderen Strömungseigenschaften, d. h. insbesondere in bestimmten Strömungsprofilen, Strömungsgeschwindigkeiten, etc., eines Strömungsfluids resultiert. Insbesondere ist es denkbar, dass das wenigstens eine Strömungskanalelement entlang seiner Erstreckung bzw. entsprechende Wandungen des wenigstens einen Strömungskanalelements unveränderliche bzw. unveränderte oder veränderliche bzw. veränderte Oberflächenstrukturierungen bzw. -beschichtungen aufweist. Durch unveränderliche bzw. unveränderte Oberflächenstrukturierungen bzw. - beschichtungen können weitgehend homogene Strömungseigenschaften, d. h. z. B. weitgehend homogene Strömungsprofile, Strömungsgeschwindigkeiten, etc., erzeugt werden, was sich gegebenenfalls positiv auf eine gewünschte Wärmeübertragung von einem Strömungsfluid auf das Strömungskanalelement und weiter auf den Trägerkörper auswirkt. Durch veränderliche bzw. veränderte Oberflächenstrukturierungen bzw. -beschichtungen können unterschiedliche Strömungseigenschaften, d. h. z. B. unterschiedliche Strömungsprofile, Strömungsgeschwindigkeiten, etc., erzeugt werden, was sich gegebenenfalls positiv auf eine gewünschte Wärmeübertragung von einem Strömungsfluid auf das Strömungskanalelement und weiter auf den Trägerkörper auswirkt. Über entsprechende Oberflächenstrukturierungen bzw. -beschichtungen lassen sich in allen Fällen auch zusätzliche Eigenschaften, wie z. B. Anti-Korrosions-, oder Anti-Haft-Eigenschaften, etc., realisieren.

Selbstverständlich kann auch der Trägerkörper zumindest abschnittsweise, gegebenenfalls vollständig, mit einer bestimmten Oberflächenstrukturierung oder -beschichtung versehen sein, etwa um zusätzliche Eigenschaften, wie z. B. Anti-Korrosions-, oder Anti-Haft-Eigenschaften, etc., realisieren.

Analog kann auch das wenigstens eine Strömungskanalelement zumindest abschnittsweise, gegebenenfalls vollständig, mit einer bestimmten Oberflächenstrukturierung oder -beschichtung versehen sein, etwa um, um die Wärmeleitung und die mechanische Anbindung an den Trägerkörper, z. B. durch ein Verankern oder gezieltes Gleiten bzgl. unterschiedlicher Wärmeausdehnung, zu beeinflussen.

Ferner ist es in allen Ausführungsformen denkbar, dass das wenigstens eine Strömungskanalelement durch mehrere miteinander strömungstechnisch verbundene Strömungskanalelementsegmente gebildet ist. Entsprechende Strömungskanalelementsegmente können ebenso als in einer oder mehreren Raumrichtungen vordefiniert konfigurierte Gebilde vorliegen. Beispielsweise können vordefiniert konfigurierte Strömungskanalelementsegmente ohne Umformbereiche, mithin nicht umgeformte bzw. gebogene Strömungskanalelementsegmente, und vordefiniert konfigurierte Strömungskanalelementsegmente mit einem oder mehreren Umformbereichen, mithin umgeformte bzw. gebogene, Strömungskanalelemente vorliegen, welche miteinander unter Ausbildung eines vordefiniert konfigurierten Strömungskanalelements verbunden werden. Über eine Verbindung entsprechender vordefiniert konfigurierter Strömungskanalelementsegmente können nach dem Baukastenprinzip gezielt vordefiniert konfigurierte Strömungskanalelemente zusammengestellt werden.

Entsprechende Strömungskanalelementsegmente können unabhängig von ihrer jeweiligen Geometrie form- und/oder kraft- und/oder stoffschlüssig direkt oder indirekt, d. h. unter Zwischenschaltung wenigstens eines Bauteils oder einer Bauteilgruppe (z.B. Verteiler oder Sammler), insbesondere strömungstechnisch, miteinander verbunden sein. Lediglich beispielhaft wird in diesem Zusammenhang auf Pressen, Klemmen, Schrauben, Stecken, Kleben, Löten, Schweißen, verwiesen. Gegebenenfalls können Montage- oder Verbindungselemente, wie z. B. Schraubelemente, insbesondere Schneidringverschraubelemente, Pressverbinderelemente, etc., verwendet werden.

Ferner ist es in allen Ausführungsformen denkbar, dass sich eine entsprechende Strömungskanalanordnung weitgehend gleichmäßig verteilt in dem Trägerkörper angeordnet ist. Dies resultiert typischerweise in einer weitgehend homogenen Energieübertragung zwischen einem durch das wenigstens eine Strömungskanalelement strömenden Strömungsfluid und dem Trägerkörper. Es ist jedoch auch möglich, dass durch eine gezielte lokale Variation von Anzahl, Anordnung und/oder Ausrichtung entsprechender Strömungskanalelemente gezielt eine inhomogene Energieübertragung zwischen einem durch das wenigstens eine Strömungskanalelement strömenden Strömungsfluid und dem Trägerkörper realisiert wird, sodass der Trägerkörper Bereiche aufweisen kann, welche im Vergleich zu anderen Bereichen ein erhöhtes oder reduziertes Temperiervermögen aufweisen.

Ferner ist es in allen Ausführungsformen denkbar, dass dem wenigstens einen Strömungskanalelement eine Stützstruktur zugeordnet ist, welche wenigstens ein, z. B. strebenartiges bzw. -förmiges, Stützelement umfasst, welches einen Abschnitt des wenigstens einen Strömungskanalelements, insbesondere vor dem und bei einem Vergussprozess mit einem den Trägerkörper bildenden Material - in seiner räumlichen Ausrichtung stützt und damit stabilisiert. Selbstverständlich kann sich ein entsprechendes Stützelement zwischen mehreren Abschnitten des wenigstens einen Strömungskanalelements oder zwischen mehreren Strömungskanalelementen erstrecken, sodass es gleichzeitig mehrere Abschnitte des wenigstens einen Strömungskanalelements oder gleichzeitig mehrere Strömungskanalelemente stützt und stabilisiert.

Ferner ist es in allen Ausführungsformen denkbar, dass der Temperiereinrichtung, d. h. insbesondere dem wenigstens einen Strömungskanalelement, und/oder dem Formwerkzeugelement wenigstens eine Sensoreinrichtung zugeordnet ist, welche wenigstens ein Sensorelement zur Erfassung einer chemischen und/oder physikalischen Größe umfasst. Über ein entsprechendes Sensorelement lassen sich z. B. chemische Größen, wie z. B. die chemische Zusammensetzung eines Strömungsfluids, oder physikalische Größen, wie z. B. der Druck, die Temperatur, die Strömungsgeschwindigkeit, die Viskosität eines Strömungsfluids, erfassen. Entsprechende Sensorelemente sind zur Erzeugung von Sensorsignalen eingerichtet. Entsprechende erfasste Sensorsignale beschreibende Sensorinformationen können z. B. dazu verwendet werden, den Betrieb des Formwerkzeugs oder einer übergeordneten Vorrichtung zur Herstellung eines Partikelschaumformteils zu steuern und/oder zu regeln. Insbesondere kann der Betrieb der Temperiereinrichtung gesteuert und/oder geregelt werden, was z. B. durch eine Steuerung der Strömungseigenschaften des das wenigstens eine Strömungskanalelement durchströmenden Strömungsfluids realisierbar ist.

Selbstverständlich kann die Strömungskanalanordnung nicht nur ein, sondern mehrere Strömungskanalelemente umfassen. Die Strömungskanalelemente können z. B. unter Ausbildung einer sich in wenigstens einer Raumebene, insbesondere flächig, innerhalb des Trägerkörpers erstreckenden Strömungskanalanordnung angeordnet sein. Sämtliche Ausführungen im Zusammenhang mit den funktionellen bzw. konstruktiven Eigenschaften des wenigstens einen Strömungskanalelements gelten sonach anlog für jedes Strömungskanalelement der Strömungskanalanordnung.

Für Ausführungsformen mit mehreren Strömungskanalelementen gilt grundsätzlich, dass wenigstens zwei Strömungskanalelemente, insbesondere unter Ausbildung einer gemeinsamen Strömungskanalstruktur, miteinander über wenigstens einen Verbindungsbereich strömungstechnisch kommunizieren können, oder wenigstens zwei Strömungskanalelemente, insbesondere unter Ausbildung getrennter Strömungskanalstrukturen, nicht miteinander über wenigstens einen Verbindungsbereich strömungstechnisch kommunizieren können. In der ersten Variante ist zwischen wenigstens zwei Strömungskanalelementen sonach wenigstens ein Verbindungsbereich gegeben, sodass die wenigstens zwei Strömungskanalelemente miteinander kommunizieren, sodass ein Strömungsfluid aus einem ersten Strömungskanalelement in wenigstens ein mit diesem kommunizierendes weiteres Strömungskanalelement strömen kann und umgekehrt. Insbesondere sind derart ein- oder mehrdimensionale, d. h. insbesondere dreidimensionale, netzwerkartige bzw. -förmige Strömungskanalanordnungen realisierbar, welche sich zumindest abschnittsweise, gegebenenfalls vollständig in dem Trägerkörper erstrecken. In der zweiten Variante ist zwischen wenigstens zwei Strömungskanalelementen kein Verbindungsbereich gegeben, sodass die wenigstens zwei Strömungskanalelemente nicht miteinander kommunizieren. Die wenigstens zwei Strömungskanalelemente stellen vielmehr separate Temperierkanäle dar, wobei ein erster Temperierkanal z. B. zum Aufheizen und ein zweiter Temperierkanal z. B. zum Abkühlen genutzt werden kann.

Grundsätzlich unabhängig von der strömungstechnischen Verbindung jeweiliger Strömungskanalelemente können mehrere Strömungskanalelemente z. B. in einer parallel oder winklig zueinander ausgerichteten Anordnung angeordnet sein. Insbesondere können ein- oder mehrdimensionale, d. h. insbesondere dreidimensionale, gitterartige bzw. -förmige Anordnungen realisiert werden.

Eine beispielhafte Konfiguration einer mehrere Strömungskanalelemente umfassenden Strömungskanalanordnung sieht ein mit einem Zuströmabschnitt- oder -bereich versehenes erstes Strömungskanalelement, ein, insbesondere parallel, zu dem ersten Strömungskanalelement angeordnetes, mit einem Ausströmabschnitt oder -bereich versehenes zweites Strömungskanalelement und wenigstens ein das erste Strömungskanalelement mit dem zweiten Strömungskanalelement strömungstechnisch verbindendes drittes Strömungskanalelement vor. Das wenigstens eine dritte Strömungskanalelement kann winklig, d. h. insbesondere rechtwinklig, relativ zu dem ersten und dem zweiten Strömungskanalelement angeordnet sein. Sofern mehrere dritte Strömungskanalelemente vorhanden sind, können diese, z. B. gitterartig bzw. - förmig, regelmäßig oder unregelmäßig angeordnet sein. Insbesondere sind parallele oder nicht parallele Anordnungen einzelner, mehrerer oder sämtlicher dritter Strömungskanalelemente denkbar. Das erste und zweite Strömungskanalelement können in einer entsprechenden Konfiguration gegebenenfalls auch als Verteilerelemente bezeichnet bzw. erachtet werden. Die ersten, zweiten und dritten Strömungskanalelemente sind, wie erwähnt, strömungstechnisch miteinander verbunden und kommunizieren daher strömungstechnisch miteinander. Die jeweiligen Strömungskanalelemente können form- und/oder kraft- und/oder stoffschlüssig direkt oder indirekt, d. h. unter Zwischenschaltung wenigstens eines Bauteils oder einer Bauteilgruppe, insbesondere strömungstechnisch, miteinander verbunden sein. Lediglich beispielhaft wird in diesem Zusammenhang wiederum auf Pressen, Klemmen, Schrauben, Stecken, Kleben, Löten, Schweißen, verwiesen. Gegebenenfalls können Montage- oder Verbindungselemente, wie z. B. Schraubelemente, insbesondere Schneidringverschraubelemente, Pressverbinderelemente, etc., verwendet werden.

Eine entsprechend konfigurierte Strömungskanalanordnung kann sich gegebenenfalls auch über eine entsprechende Segmentierung eines einzelnen Strömungskanalelements realisieren lassen.

Für alle Ausführungsformen gilt, dass die Temperiereinrichtung, insbesondere, als Einsatzelement, in das wenigstens eine Formwerkzeugelement integriert sein kann. Das wenigstens eine Formwerkzeugelement kann sonach wenigstens einen, z. B. durch eine Ausnehmung, Öffnung, etc. gebildeten, Aufnahmebereich zur Aufnahme eines entsprechenden Einsatzelements und somit der Temperiereinrichtung aufweisen. Sofern das Formwerkzeug mehrere Formwerkzeugelemente umfasst, können mehrere, gegebenenfalls alle, Formwerkzeugelemente einen entsprechenden Aufnahmebereich zur Aufnahme eines entsprechenden Einsatzelements umfassen.

Alternativ oder ergänzend kann das wenigstens eine Formwerkzeugelement durch die Temperiereinrichtung gebildet sein. Die Temperiereinrichtung, d. h. insbesondere der Trägerkörper nebst Strömungskanalanordnung, kann sonach eine die wenigstens eine Formwerkzeugkavität begrenzende Wandung des Formwerkzeugs bilden. Dies gilt insbesondere für Ausführungsformen des Trägerkörpers aus Metall, da der Trägerkörper hier jedenfalls die erforderlichen strukturellen Eigenschaften eines entsprechenden Formwerkzeugelements aufweist.

Ein zweiter Aspekt der Erfindung betrifft eine Temperiereinrichtung für ein Formwerkzeug zur Herstellung eines Partikelschaumformteils. Die Temperiereinrichtung umfasst eine Strömungskanalanordnung, welche wenigstens ein sich, insbesondere durch einen Umformvorgang, vordefiniert konfiguriert in wenigstens einer Raumrichtung erstreckendes, einen von einem Strömungsfluid durchströmbaren Strömungskanal begrenzendes Strömungskanalelement umfasst, wobei das wenigstens eine Strömungskanalelement zumindest abschnittsweise, gegebenenfalls vollständig, in einem, insbesondere aus einem insbesondere gießfähigen, Material gebildeten Trägerkörper angeordnet ist.

Sämtliche Ausführungen im Zusammenhang mit dem Formwerkzeug gemäß dem ersten Aspekt gelten analog für die Temperiereinrichtung gemäß dem zweiten Aspekt.

Ein dritter Aspekt der Erfindung betrifft ein Verfahren zur Herstellung eines Formwerkzeugelements für ein Formwerkzeug zur Herstellung eines Partikelschaumformteils. Das verfahrensgemäß herstellbare Formwerkzeugelement umfasst eine Temperiereinrichtung, welche eine Strömungskanalanordnung umfasst, welche wenigstens ein sich vordefiniert konfiguriert in wenigstens einer Raumrichtung und/oder Raumebene erstreckendes, einen von einem Strömungsfluid durchströmbaren Strömungskanal begrenzendes Strömungskanalelement umfasst, wobei das wenigstens eine Strömungskanalelement zumindest abschnittsweise, gegebenenfalls vollständig, in einem, insbesondere aus einem gießfähigen Material gebildeten, Trägerkörper angeordnet ist. Das Verfahren umfasst die folgenden Schritte:
- Bereitstellen wenigstens einer Strömungskanalanordnung, welche wenigstens ein sich vordefiniert konfiguriert in wenigstens einer Raumrichtung und/oder Raumebene erstreckendes, einen von einem Strömungsfluid durchströmbaren Strömungskanal begrenzendes Strömungskanalelement umfasst;
- zumindest abschnittsweises, gegebenenfalls vollständiges, Einbringen der bereitgestellten Strömungskanalanordnung in ein einen Trägerkörper bildendes Material bzw. eine einen Trägerkörper bildende Materialstruktur unter Ausbildung der Temperiereinrichtung.

Bei dem Material kann es sich um ein aushärtbares bzw. gießfähiges Material handeln. Das zumindest abschnittsweise, gegebenenfalls vollständige, Einbringen der bereitgestellten Strömungskanalanordnung in ein entsprechendes aushärtbares bzw. gießfähiges thermisch leitfähiges Material kann z. B. durch Vergießen der Strömungskanalanordnung mit einem entsprechenden Material oder durch Eintauchen der Strömungskanalanordnung in ein entsprechendes Material erfolgen. Das Verfahren kann ferner den Schritt des Durchführens wenigstens einer Maßnahme zum chemischen und/oder physikalischen Aushärten bzw. Erstarren des entsprechenden Materials unter Ausbildung der Temperiereinrichtung umfassen.

Das Material bzw. die Materialstruktur, in welches die Strömungskanalanordnung eingebracht wird, kann, wie erwähnt, ein thermisch leitfähiges Material, vorzugsweise ein Metall, sein. Wie ebenso erwähnt, kommen insbesondere gießfähige Metalle, wie z. B. Aluminium oder Kupfer in Betracht.

Sämtliche Ausführungen im Zusammenhang mit dem Formwerkzeug gemäß dem ersten Aspekt gelten analog für das Verfahren gemäß dem dritten Aspekt.

Die Erfindung ist anhand von Ausführungsbeispielen in den Zeichnungen näher erläutert. Dabei zeigt:
Fig. 1 eine Prinzipdarstellung eines Formwerkzeugs gemäß einem Ausführungsbeispiel; und
Fig. 2 - 10 jeweils eine Prinzipdarstellung einer Temperiereinrichtung gemäß einem Ausführungsbeispiel.

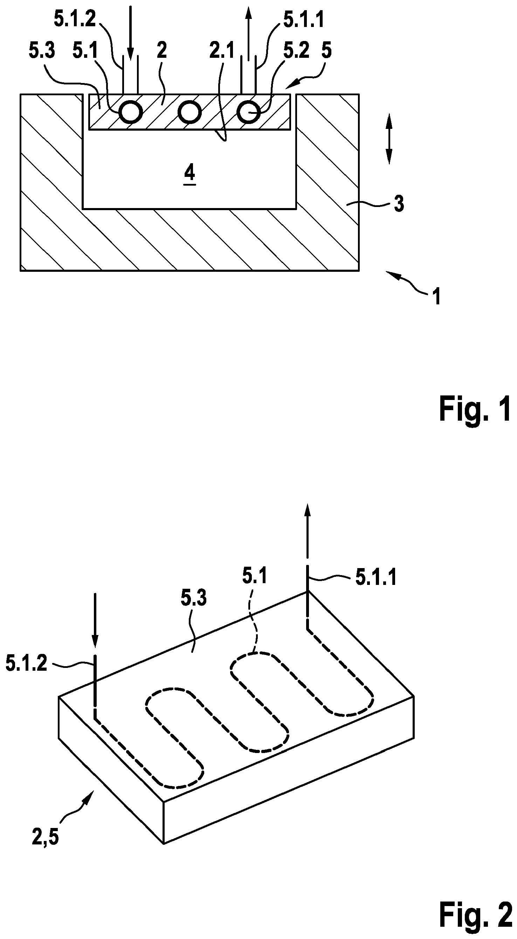

Fig. 1 zeigt eine Prinzipdarstellung eines Formwerkzeugs 1 gemäß einem Ausführungsbeispiel in einer Schnittansicht. Das Formwerkzeug 1 ist im Allgemeinen zur Verarbeitung von expandierbarem oder expandiertem Kunststoffpartikelmaterial, d. h. z. B. expandierbaren oder expandiertem Polyolefin- oder Polystyrolmaterial, zur Herstellung eines, insbesondere dickwandigen bzw. großvolumigen, ggf. geometrisch komplexen Partikelschaumformteils, eingerichtet. Bei dem Formwerkzeug 1 handelt es sich nicht um ein Spritzgießwerkzeug, in welches eine plastifizierte Kunststoffschmelze einspritzbar ist.

Das Formwerkzeug 1 umfasst mehrere, gegebenenfalls auch als Formwerkzeughälften zu bezeichnende bzw. zu erachtende, Formwerkzeugelemente 2, 3, welche gemeinsam eine Formwerkzeugkavität 4 begrenzen bzw. definieren. Wie in Fig.1 durch den Doppelpfeil angedeutet, kann wenigstens ein Formwerkzeugelement 2, 3 relativ zu wenigstens einem anderen Formwerkzeugelement 2, 3 bewegbar gelagert sein. Derart kann eine Offenstellung des Formwerkzeugs 1 realisiert werden, in welcher, z. B. zum Zwecke der Entnahme eines hergestellten Partikelschaumformteils, eine Zugangsmöglichkeit in die Formwerkzeugkavität 4 gegeben ist, und eine in Fig. 1 gezeigte Schließstellung des Formwerkzeugs 1 realisiert werden, in welcher keine Zugangsmöglichkeit in die Formwerkzeugkavität 4 gegeben ist.

In dem in Fig. 1 gezeigten Ausführungsbeispiel weist das obere Formwerkzeugelement 2 in der Schnittansicht beispielhaft eine plattenartige- bzw. -förmige Grundform und das untere Formwerkzeugelement 3 beispielhaft eine kastenartige Grundform auf. Denkbar ist es jedoch auch, dass ein entsprechendes Formwerkzeugelement 2, 3 oder ein weiteres Formwerkzeugelement (nicht gezeigt) eine längliche, sich, insbesondere fingerartig, in die Formwerkzeugkavität 4 erstreckende Grundform aufweist.

Das Formwerkzeug 1 umfasst weiterhin eine Temperiereinrichtung 5 zum Temperieren, d. h. insbesondere zum Aufheizen und/oder Abkühlen, des oberen Formwerkzeugelements 2. Wenngleich die Temperiereinrichtung 5 im Weiteren im Zusammenhang mit dem oberen Formwerkzeugelement 2 erläutert wird, könnte das Formwerkzeug 1 alternativ oder ergänzend eine entsprechende Temperiereinrichtung 5 zum Temperieren, d. h. insbesondere zum Aufheizen und/oder Abkühlen, des unteren Formwerkzeugelements 3 umfassen, sodass die entsprechenden Erläuterungen analog gelten.

Das Temperieren des Formwerkzeugelements 2 erfolgt im Zusammenhang mit der Durchführung einer Maßnahme zum Verarbeiten von Kunststoffpartikelmaterial zur Herstellung eines Partikelschaumformteils. Insbesondere erfolgt das Temperieren des Formwerkzeugelements 2 im Zusammenhang mit der Durchführung einer Maßnahme zum Verbinden von in die Formwerkzeugkavität 4 eingefülltem Kunststoffpartikelmaterial. Das Temperieren des Formwerkzeugelements 2 kann daher ein Einbringen von thermischer Energie in ein in die Formwerkzeugkavität 4 eingefülltes Kunststoffpartikelmaterial bewirken, welches wiederum ein, gegebenenfalls mit einer Expansion des Kunststoffpartikelmaterials einhergehenden, Verbinden des in die Formwerkzeugkavität 4 eingefüllten Kunststoffpartikelmaterials unter Ausbildung eines herzustellenden Partikelschaumformteils bewirkt. Das Formwerkzeugelement 2 kann sonach wenigstens eine thermische Wirkfläche 2.1 umfassen, über welche, z. B. zum Zwecke des Aufheizens oder Abkühlens, ein Austausch von thermischer Energie mit einem in der Formwerkzeugkavität 4 befindlichen Kunststoffpartikelmaterial oder Partikelschaumformteil erfolgen kann. Ersichtlich ist die thermische Wirkfläche diejenige Fläche des Formwerkzeugelements 2, welche die Formwerkzeugkavität 4 direkt begrenzt, d. h. der Formwerkzeugkavität 4 direkt zugewandt ist.

Im Zusammenhang mit der Einbringung von thermischer Energie in ein in die Formwerkzeugkavität 4 eingefülltes Kunststoffpartikelmaterial gilt, dass diese insbesondere dampffrei bzw. dampflos und somit (im Wesentlichen) konduktionsbasiert oder kombiniert konduktiv-konvektiv erfolgen kann. Mithin kann das Formwerkzeug 1 zur dampffreien bzw. dampflosen und somit rein konduktiven bzw. konduktiv-konvektiven Verarbeitung von Kunststoffpartikelmaterialien zur Herstellung von Partikelschaumformteilen eingerichtet sein.

Die Temperiereinrichtung 5 umfasst eine Strömungskanalanordnung, welche wenigstens ein sich, insbesondere durch einen Umformvorgang, in wenigstens einer Raumrichtung und damit in wenigstens einer Raumrichtung und/oder Raumebene erstreckendes Strömungskanalelement 5.1 umfasst. Das Strömungskanalelement 5.1 begrenzt einen von einem Strömungsfluid, d. h. z. B. einem, gegebenenfalls druckbeaufschlagten, Gas und/oder einer Flüssigkeit, durchströmbaren Strömungskanal 5.2. Die Temperiereinrichtung 5 umfasst damit ein Strömungskanalelement 5.1, welches ein sich ein- oder mehrdimensional erstreckendes rohrartiges bzw. -förmiges Gebilde darstellt, welches wenigstens einen als von einem Strömungsfluid durchströmbaren Strömungskanal 5.2 nutzbaren Hohlraum begrenzt.

Das Strömungskanalelement 5.1 weist eine vordefiniert konfigurierte sich in wenigstens einer Raumrichtung und damit, wie erwähnt, auch in wenigstens einer Raumebene erstreckende ein- oder mehrdimensionale Raumform auf. Die vordefiniert konfigurierte räumliche Erstreckung des Strömungskanalelements 5.1 resultiert typischerweise aus wenigstens einem Umformvorgang, d. h. insbesondere einem Biegevorgang, eines rohrartigen bzw. -förmigen Halbzeugs, welches unter Ausbildung eines entsprechenden sich vordefiniert konfiguriert in wenigstens einer Raumrichtung und/oder Raumebene erstreckenden Strömungskanalelements 5.1 von einer ursprünglichen Konfiguration in eine gewünschte Zielgeometrie bzw. -konfiguration umgeformt ist bzw. wird, sodass es ein als vordefiniert konfiguriertes Strömungskanalelement 5.1 einer entsprechenden Strömungskanalanordnung verwendbares räumlich-körperliches Gebilde bildet. Die Zielgeometrie bzw. -konfiguration des Strömungskanalelements 5.1 wird typischerweise im Hinblick auf gewünschte thermische Eigenschaften, wie z. B. gewünschte thermische Wechselwirkungseigenschaften mit einem das Strömungskanalelement 5.1 umgebenden Trägerkörper 5.3, und/oder gewünschte strukturelle Eigenschaften, wie z. B. eine gewünschte mechanische Eigenschafgen, d. h. z. B. eine gewünschte Steifigkeit, gewählt. Das Strömungskanalelement 5.1 kann sonach, wie die Ausführungsbeispiele gemäß den Fig. 2 - 6 beispielhaft zeigen, ein oder mehrere Umformbereiche, d. h. insbesondere Biegebereiche, umfassen, an welchen sich die räumliche Erstreckung des Strömungskanalelements 5.1 bzw. wenigstens eines Abschnitts des Strömungskanalelements 5.1 ändert. Das Strömungskanalelement 5.1 kann sonach einen sich in einer ersten Raumrichtung und/oder Raumebene erstreckenden ersten Strömungskanalelementabschnitt und wenigstens einen sich in einer weiteren Raumrichtung und/oder Raumebene erstreckenden weiteren Strömungskanalelementabschnitt umfassen. Derart können z. B. ein- oder mehrdimensionale mäanderartige bzw. -förmige und/oder spiralartige bzw. - förmige Konfigurationen des Strömungskanalelements 5.1 in einen oder mehreren Raumrichtungen und/oder Raumebenen realisiert werden.

In den in den Fig. gezeigten Ausführungsbeispielen ist das Strömungskanalelement 5.1 in dem z. B. aus einem gießfähigen Material, d. h. z. B. einem Vergussmaterial, gebildeten Trägerkörper 5.3 angeordnet. Das Strömungskanalelement 5.1 ist sonach von dem Trägerkörper 5.3 umgeben bzw. umschlossen und damit zumindest abschnittsweise, gegebenenfalls vollständig, in den Trägerkörper 5.3 eingebettet. Ersichtlich ist das Strömungskanalelement 5.1 in den in den Fig. gezeigten Ausführungsbeispielen beispielhaft direkt von dem Trägerkörper 5.3 umgeben bzw. umschlossen und damit direkt in den Trägerkörper 5.3 eingebettet. Dies kann insbesondere durch einen Verguss des Strömungskanalelements 5.1 durch ein den Trägerkörper 5.3 bildendes gießfähiges Material, d. h. insbesondere ein Vergussmaterial, erfolgen. Alternativ wäre eine Anordnung des Strömungskanalelements 5.1 in wenigstens einem vorgeformten Trägerkörper möglich; denkbar wäre z. B. eine Anordnung des Strömungskanalelements 5.1 zwischen zwei, gegebenenfalls mit z. B. durch Ausfräsen, Ablation, Erodieren, etc., gebildeten, Aufnahmebereichen versehenen Trägerkörperplatten, welche z. B. form- und/oder kraft- und/oder stoffschlüssig, miteinander verbunden sind.

Zwischen dem Trägerkörper 5.3 und dem von diesem umgebenen bzw. umschlossenen Strömungskanalelement 5.1 besteht ein thermisch leitfähiger Kontakt, sodass thermische Energie eines das Strömungskanalelement 5.1 durchströmenden Strömungsfluids, d. h. z. B. ein Heizfluid, über die Wandungen des Strömungskanalelements 5.1 auf den Trägerkörper 5.3 übertragen werden kann. Derart kann z. B. ein Aufheizen des Trägerkörpers 5.3 und somit eine Aufheizwirkung der Temperiereinrichtung 5 realisiert werden. Umgekehrt kann thermische Energie aus dem Trägerkörper 5.3 über die Wandungen des Strömungskanalelements 5.1 auf ein das Strömungskanalelement 5.1 durchströmendes Strömungsfluid, d. h. z. B. ein Kühlfluid, übertragen werden. Derart kann z. B. ein Abkühlen des Trägerkörpers 5.3 und somit eine Abkühlwirkung der Temperiereinrichtung 5 realisiert werden.

Das den Trägerkörper 5.3 bildende Material bzw. der Trägerkörper 5.3 weist sonach thermisch leitfähige Eigenschaften auf, sodass sich über den Trägerkörper 5.3 thermische Energie übertragen lässt. Gleiches gilt für das das Strömungskanalelement 5.1 bildende Material.

Der Trägerkörper 5.3 ist insbesondere aus einem Metall, insbesondere Leichtmetall, vorzugsweise Aluminium oder Kupfer, gebildet. Die Verwendung von Aluminium oder Kupfer ist besonders zweckmäßig, als sich Aluminium oder Kupfer zusätzlich zu den vorgenannten Vorteilen von Metallen z. B. durch eine geringe Anfälligkeit für Korrosion und eine vergleichsweise niedrige Verarbeitungstemperatur, d. h. insbesondere eine vergleichsweise niedrige Schmelztemperatur, auszeichnet. Ein weiterer besonderer Vorteil von Aluminium oder Kupfer ist seine Gießfähigkeit und damit die Verarbeitbarkeit in einem Gießverfahren, in welchem eine entsprechende Strömungskanalanordnung mit einer gießfähigen Aluminium- oder Kupferschmelze unter Ausbildung der Temperiereinrichtung 5 vergossen wird.

Sofern der Trägerkörper 5.3, was ebenso denkbar ist, aus einem Kunststoff gebildet sein sollte, kann der Kunststoff ein mit thermisch leitfähigen Partikeln, vorzugsweise Metallpartikeln, versetzter Kunststoff sein. Als Kunststoff kommen z. B. thermoplastische oder duroplastische Kunststoffe in Frage. Es ist sonach denkbar, dass eine entsprechende Strömungskanalanordnung mit einer gießfähigen, gegebenenfalls einer spritzgießfähigen, Kunststoffmasse unter Ausbildung der Temperiereinrichtung 5 umgossen, gegebenenfalls umspritzt, wird.

Um eine möglichst effiziente Wärmeübertragung von dem Trägerkörper 5.3 zu realisieren, ist das Strömungskanalelement 5.1 zumindest abschnittsweise, gegebenenfalls vollständig, oberflächen- bzw. konturnah parallel zu einer der Formwerkzeugkavität 4 zugewandten Oberfläche des Trägerkörpers 5.3 angeordnet. Die entsprechende Oberfläche des Trägerkörpers 5.3 bildet sodann eine entsprechende Wirkfläche des Trägerkörpers 5.3 bzw. der Temperiereinrichtung 5. Das Strömungskanalelement 5.1 kann sonach, insbesondere direkt, unterhalb einer Wirkfläche des Trägerkörpers 5.3 bzw. der Temperiereinrichtung 5 angeordnet sein.

Die Temperiereinrichtung 5 ist sonach durch Einbringen einer ein vordefiniert konfiguriertes Strömungskanalelement 5.1 umfassenden Strömungskanalanordnung in ein einen Trägerkörper 5.3 bildendes Material gebildet. Die Temperiereinrichtung 5 kann konkret durch Umgießen bzw. Vergießen einer ein vordefiniert konfiguriertes Strömungskanalelement 5.1 umfassenden Strömungskanalanordnung mit einem aushärtbaren bzw. gießfähigen Material und Aushärten bzw. Erstarren des aushärtbaren bzw. gießfähigen Materials gebildet werden. Es handelt sich hierbei um eine besonders einfache Art der Herstellung der Temperiereinrichtung 5, welche höchsten Anforderungen an Wärmeübertragung und, insbesondere weil es sich bei entsprechenden Strömungskanalelementen typischerweise um, abgesehen von Zuströmabschnitten und Ausströmabschnitten, vollständig geschlossene Körper handelt, Zuverlässigkeit genügt.

Anhand der Ausführungsbeispiele der Fig. 1 - 6 ist ersichtlich, dass das Strömungskanalelement 5.1 ein sich ein- oder mehrdimensional erstreckendes rohrartiges bzw. -förmiges Gebilde darstellt und sich in mehreren Raumrichtungen in einer oder mehreren Raumebenen erstrecken kann. Für die in den Fig. gezeigten Ausführungsbeispiele eines plattenartigen bzw. -förmigen respektive quaderartigen bzw. -förmigen Trägerkörpers 5.3 kann sich das Strömungskanalelement 5.1 sonach zumindest abschnittsweise in einer oder mehreren Raumrichtungen in der Haupterstreckungsebene des Trägerkörpers 5.3 oder einer hierzu parallelen Ebenen und zumindest abschnittsweise in einer zur Haupterstreckungsebene des Trägerkörpers 5.3 (recht)winklig ausgerichteten Ebene erstrecken. Derart können die bereits erwähnten ein- oder mehrdimensionalen mäanderartigen bzw. -förmigen und/oder spiralartigen bzw. - förmigen Konfigurationen des Strömungskanalelements 5.1 in einer oder mehreren Raumrichtungen bzw. -ebenen realisiert werden.

Das Strömungskanalelement 5.1 kann in allen Ausführungsbeispielen als ein in wenigstens eine Raumrichtung vordefiniert konfiguriert gebogenes Rohr- oder Schlauchelement ausgebildet sein oder ein solches umfassen. Insbesondere kann das Strömungskanalelement 5.1 aus einem Metallrohr, insbesondere einem Metallrohr aus einem Eisen-basierten metallischen Werkstoff, vorzugsweise Stahl bzw. Edelstahl, oder einem Kunststoffrohr, insbesondere einem Kunststoffrohr aus PA oder PVC, gebildet sein. Metallrohre, d. h. insbesondere Stahlrohre bzw. Edelstahlrohre, sind dabei aufgrund ihrer besonderen thermischen wie auch strukturellen Eigenschaften besonders zweckmäßig; insbesondere sind Metallrohre aufgrund ihrer Duktilität gut umformbar, sodass sich diese in sich ein- oder mehrdimensional erstreckende räumliche Gebilde umformen lassen.

Anhand der Ausführungsbeispiele der Fig. 1 - 6 ist ersichtlich, dass das bzw. ein Strömungskanalelement 5.1, insbesondere im Bereich eines freien Endes, einen Ausströmabschnitt oder -bereich 5.1.1. umfassen kann, über welchen ein Strömungsfluid aus dem durch das Strömungskanalelement 5.1 begrenzten Strömungskanal 5.2 austreten kann. Gleichermaßen kann das Strömungskanalelement 5.1 einen Zuströmabschnitt oder -bereich 5.1.2 umfassen, über welchen ein Strömungsfluid in den durch das Strömungskanalelement 5.1 begrenzten Strömungskanal 5.2 eintreten kann. An oder in einem entsprechenden Ausströmabschnitt oder -bereich 5.1.1 und/oder an oder in einem entsprechenden Zuströmabschnitt oder -bereich 5.1.2 kann eine, insbesondere flanschartige oder -förmige, Schnittstelle (nicht gezeigt) zum Anschluss einer Strömungsfluidversorgungsleitung (nicht gezeigt) angeordnet oder ausgebildet sein. Eine entsprechende Schnittstelle ermöglicht eine strömungstechnische Verbindung des Strömungskanalelements 5.1 mit einer Strömungsfluidversorgung.

In den in den Fig. gezeigten Ausführungsbeispielen sind jeweilige Ausströmabschnitte oder -bereiche 5.1.1 und jeweilige Zuströmabschnitte oder -bereiche 5.1.2 beispielhaft an der gleichen Seite des Trägerkörpers 5.3 angeordnet oder ausgebildet. Bei der Seite des Trägerkörpers 5.3 handelt es sich um die der Formwerkzeugkavität 4 abgewandte Seite des Trägerkörpers 5.3.

Ein entsprechender Ausströmabschnitt oder -bereich 5.1.1 und/oder ein entsprechender Zuströmabschnitt oder -bereich 5.1.2 kann an einem sich außerhalb oder innerhalb des wenigstens einen Trägerkörpers 5.3 erstreckenden Abschnitt des Strömungskanalelements 5.1 angeordnet oder ausgebildet sein. Ein entsprechender Ausströmabschnitt oder -bereich 5.1. kann sonach, wie in den Fig. beispielhaft gezeigt, außerhalb des Trägerkörpers 5.3 liegen. Eine entsprechende außerhalb des Trägerkörpers 5.3 liegende Anordnung bzw. Ausbildung ist im Hinblick auf einen möglichst einfachen Anschluss des Strömungskanalelements 5.1 an eine Strömungsfluidversorgung zweckmäßig.

Beispielhafte Konfigurationen der Temperiereinrichtung 5 werden nachfolgend im Zusammenhang mit den in den Fig. 2 - 10 gezeigten Ausführungsbeispielen in nicht abschließender Weise näher erläutert:
In dem in Fig. 2 in einer perspektivischen Darstellung gezeigten Ausführungsbeispiel weist die Temperiereinrichtung 5 ein Strömungskanalelement 5.1 mit einer mäanderartigen bzw. -förmigen Konfiguration auf.

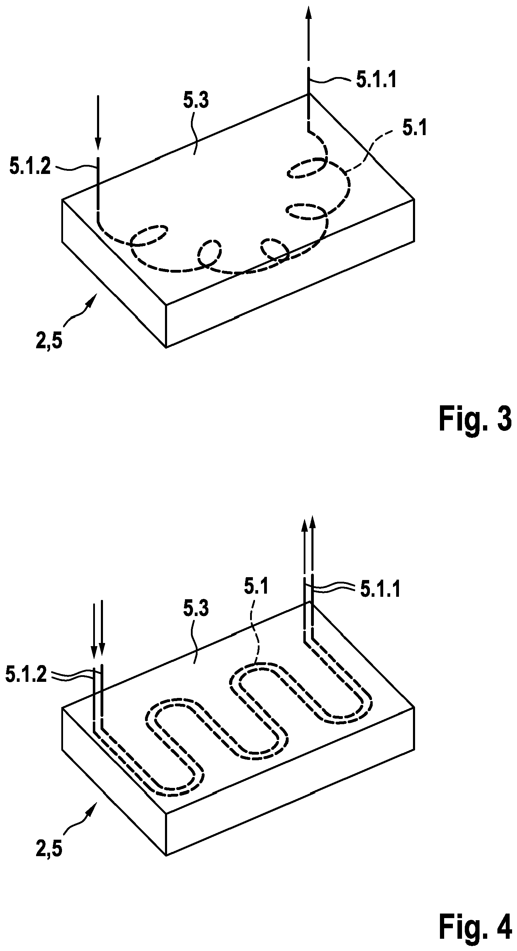

In dem in Fig. 3 in einer perspektivischen Darstellung gezeigten Ausführungsbeispiel weist die Temperiereinrichtung 5 ein Strömungskanalelement 5.1 mit einer spiralartigen bzw. -förmigen Konfiguration auf.

In dem in Fig. 4 in einer perspektivischen Darstellung gezeigten Ausführungsbeispiel weist die Temperiereinrichtung 5 zwei separate Strömungskanalelemente 5.1 jeweils mit einer mäanderartigen bzw. -förmigen Konfiguration auf. Gleichermaßen wäre es denkbar, dass die Strömungskanalelemente 5.1. miteinander unter Ausbildung einer netzwerkartigen bzw. -förmigen Strömungskanalanordnung über wenigstens einen Verbindungsbereich strömungstechnisch miteinander kommunizieren.

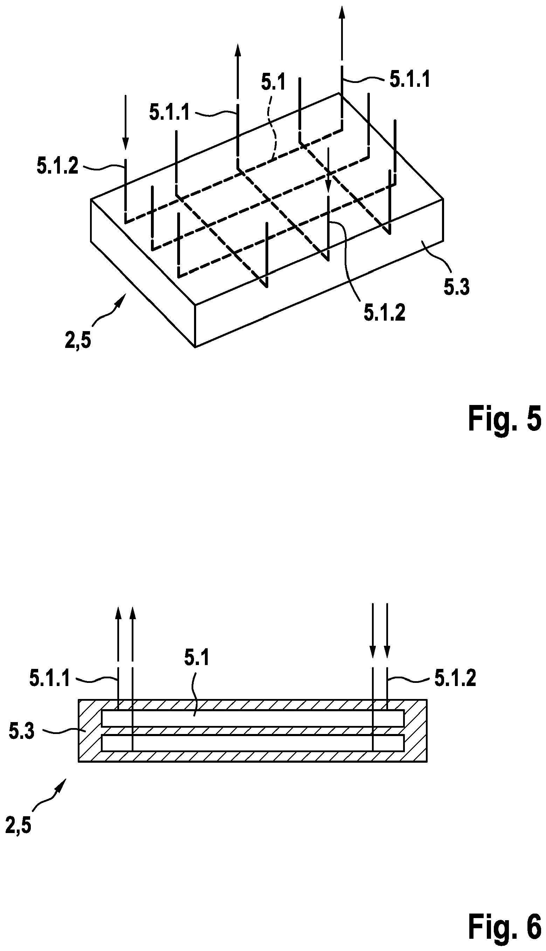

In dem in Fig. 5 in einer perspektivischen Darstellung gezeigten Ausführungsbeispiel weist die Temperiereinrichtung 5 mehrere separate Strömungskanalelemente 5.1 jeweils mit einer geradlinigen Konfiguration auf. Dabei ist eine Anzahl erster Strömungskanalelemente 5.1, beispielhaft in paralleler Anordnung, in einer ersten Raumrichtungen angeordnet, und eine Anzahl zweiter Strömungskanalelemente 5.1, beispielhaft in paralleler Anordnung, in einer zweiten Raumrichtungen angeordnet. Insgesamt liegt eine gitterartige Anordnung von Strömungskanalelementen 5.1 vor. Gleichermaßen wäre es auch hier denkbar, dass die Strömungskanalelemente 5.1. miteinander unter Ausbildung einer netzwerkartigen bzw. -förmigen Strömungskanalanordnung über wenigstens einen Verbindungsbereich strömungstechnisch miteinander kommunizieren.

Anhand der in den Fig. 4, 5 gezeigten Ausführungsbeispiele ist sonach ersichtlich, dass die Strömungskanalanordnung mehrere Strömungskanalelemente 5.1 umfassen kann. Die Strömungskanalelemente können z. B. unter Ausbildung einer sich in wenigstens einer Raumebene, insbesondere flächig, innerhalb des Trägerkörpers 5.3 erstreckenden Strömungskanalanordnung angeordnet sein.

Hierbei gilt grundsätzlich, dass wenigstens zwei Strömungskanalelemente 5.1, insbesondere unter Ausbildung einer gemeinsamen Strömungskanalstruktur, miteinander über wenigstens einen Verbindungsbereich strömungstechnisch kommunizieren können, oder wenigstens zwei Strömungskanalelemente 5.1, insbesondere unter Ausbildung getrennter Strömungskanalstrukturen, nicht miteinander über wenigstens einen Verbindungsbereich strömungstechnisch kommunizieren können. In der ersten Variante ist zwischen den Strömungskanalelementen 5.1 sonach wenigstens ein Verbindungsbereich gegeben, sodass die wenigstens zwei Strömungskanalelemente 5.1 miteinander kommunizieren, sodass ein Strömungsfluid aus einem ersten Strömungskanalelement 5.1 in wenigstens ein mit diesem kommunizierendes weiteres Strömungskanalelement 5.1 strömen kann und umgekehrt. In der zweiten Variante ist zwischen den Strömungskanalelementen 5.1 kein Verbindungsbereich gegeben, sodass die Strömungskanalelemente 5.1 nicht miteinander kommunizieren. Die Strömungskanalelemente 5.1 stellen vielmehr separate Temperierkanäle dar, wobei ein erster Temperierkanal z. B. zum Aufheizen und ein zweiter Temperierkanal z. B. zum Abkühlen genutzt werden kann.

In dem in Fig. 6 in einer Schnittdarstellung gezeigten Ausführungsbeispiel weist die Temperiereinrichtung 5 mehrere separate Strömungskanalelemente 5.1 in mehreren Raumebenen auf. Gleichermaßen wäre es auch hier denkbar, dass die Strömungskanalelemente 5.1. miteinander unter Ausbildung einer netzwerkartigen bzw. -förmigen Strömungskanalanordnung über wenigstens einen Verbindungsbereich strömungstechnisch miteinander kommunizieren.

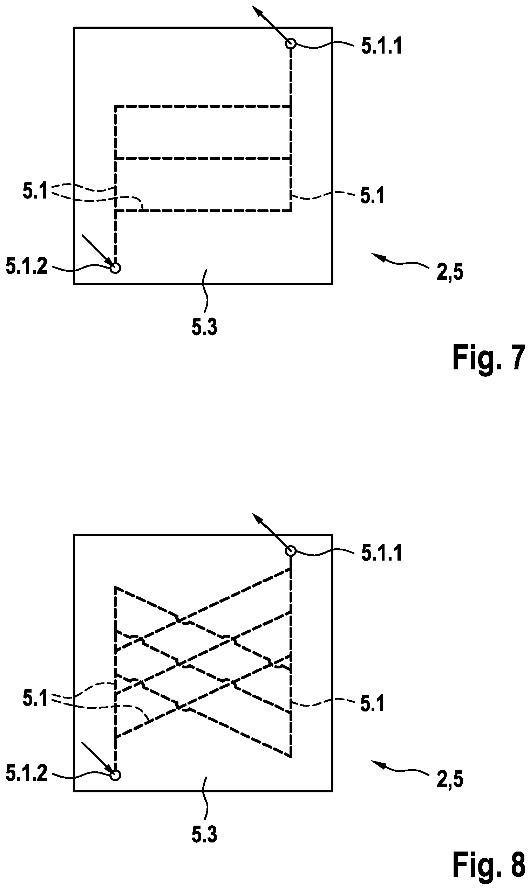

In den in den Fig. 7, 8 jeweils in einer Aufsicht gezeigten Ausführungsbeispielen weist die Temperiereinrichtung 5 eine Strömungskanalanordnung in einer Konfiguration mit mehreren Strömungskanalelementen 5.1 auf. Die Strömungskanalanordnung umfasst konkret ein mit einem Zuströmabschnitt- oder -bereich 5.1.2 versehenes erstes Strömungskanalelement 5.1, ein parallel zu dem ersten Strömungskanalelement 5.1 angeordnetes, mit einem Ausströmabschnitt oder -bereich 5.1.1 versehenes zweites Strömungskanalelement 5.1 und mehrere das erste Strömungskanalelement 5.1. mit dem zweiten Strömungskanalelement 5.1 strömungstechnisch verbindende dritte Strömungskanalelemente 5.1 vor. Ersichtlich sind die dritten Strömungskanalelemente 5.1 winklig, d. h. insbesondere rechtwinklig, relativ zu dem ersten und dem zweiten Strömungskanalelement 5.1 angeordnet.

Anhand der Fig. 7, 8 sind beispielhaft unterschiedliche gitterartig bzw. -förmig Anordnungen entsprechender dritter Strömungskanalelemente 5.1 ersichtlich. Die jeweiligen ersten und zweiten Strömungskanalelemente 5.1 können in den gezeigten Konfigurationen gegebenenfalls auch als Verteilerelemente bezeichnet bzw. erachtet werden.

Im Zusammenhang mit dem in Fig. 8 gezeigten Ausführungsbeispiel ist zu erwähnen, dass sich die Kreuzungspunkte 11 jeweiliger dritter Strömungskanalelemente 5.1- wie in Fig. 8 beispielhaft durch die Bögen angedeutet - insbesondere in abwechselnder Anordnung, in unterschiedlichen Ebenen bezüglich der Grundebene der gitterartigen bzw. -förmigen Anordnung der dritten Strömungskanalelemente 5.1 erstrecken können.

Die ersten, zweiten und dritten Strömungskanalelemente 5.1 sind in den Ausführungsbeispielen strömungstechnisch miteinander verbunden und kommunizieren daher strömungstechnisch miteinander. Die dritten Strömungskanalelemente 5.1 sind dabei jedenfalls über die ersten und zweiten Strömungskanalelemente 5.1 strömungstechnisch miteinander verbunden.

Die jeweiligen Strömungskanalelemente 5.1 können dabei form- und/oder kraft- und/oder stoffschlüssig direkt oder indirekt, d. h. unter Zwischenschaltung wenigstens eines Bauteils oder einer Bauteilgruppe, insbesondere strömungstechnisch, miteinander verbunden sein. Lediglich beispielhaft wird in diesem Zusammenhang wiederum auf Pressen, Klemmen, Schrauben, Stecken, Kleben, Löten, Schweißen, verwiesen. Gegebenenfalls können Montage- oder Verbindungselemente, wie z. B. Schraubelemente, insbesondere Schneidringverschraubelemente, Pressverbinderelemente, etc., verwendet werden.

Eine entsprechend konfigurierte Strömungskanalanordnung kann sich gegebenenfalls auch über eine entsprechende Segmentierung eines einzelnen Strömungskanalelements 5.1 realisieren lassen.

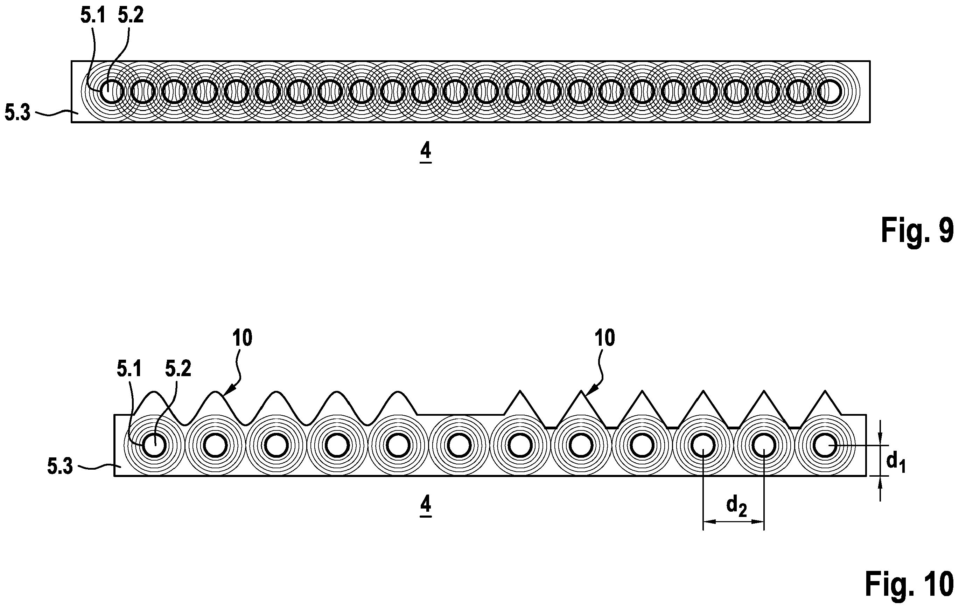

Die Fig. 9, 10 zeigen weitere Ausführungsbeispiele einer Temperiereinrichtung 5 in einer geschnittenen Ansicht. Anhand der in den Fig. 9, 10 gezeigten Ausführungsbeispiele ist ersichtlich, dass ein oder mehrere Strömungskanalelement(e) 5.1, grundsätzlich unabhängig von seiner bzw. ihrer konkreten räumlichen Erstreckung in dem Trägerkörper 5.3, so angeordnet und/oder ausgerichtet sein können, dass eine (weitgehend) homogene (flächige) Temperierung des Trägerkörpers 5.3 möglich ist. Dies kann, wie Fig. 9, 10 zeigen, z. B. durch eine gezielte Beabstandung eines Strömungskanalelements 5.1 oder eines Strömungskanalelementabschnitts von freiliegenden oberen und unteren Wandungsflächen des Trägerkörpers 5.3, d. h. z. B. einer die Formwerkzeugkavität 4 begrenzenden und dieser entsprechend zugewandten freiliegenden unteren 5.3 Wandungsfläche und einer die Formwerkzeugkavität 4 nicht begrenzenden und dieser entsprechend abgewandten freiliegenden oberen Wandungsfläche, und/oder zu jeweils (unmittelbar) benachbart angeordneten weiteren Strömungskanalelementen 5.1 oder Strömungskanalelementabschnitten realisiert sein.

In dem in Fig. 9 gezeigten Ausführungsbeispiel ist, wie durch die die thermische Energieausbreitung ausgehend von jeweiligen Strömungskanalelementen 5.1 andeutenden Ringe (Isothermen) dargestellt, der (laterale) Abstand zwischen den Symmetrie- oder Zentralachsen unmittelbar benachbarten Strömungskanalelemente 5.1 so gewählt, dass sich eine weitgehend homogene Energieausbreitung über die Dickenrichtung in dem Trägerkörper 5.3 auf seine Wirkflächen ergibt.

In dem in Fig. 10 gezeigten Ausführungsbeispiel ist, wie durch die die thermische Energieausbreitung ausgehend von jeweiligen Strömungskanalelementen 5.1 andeutenden Ringen (Isothermen) dargestellt, der Abstand d₁ der Symmetrie- oder Zentralachsen jeweiliger Strömungskanalelemente 5.1 bzw. -abschnitte zu der die Formwerkzeugkavität 4 begrenzenden und dieser entsprechend zugewandten freiliegenden unteren Wandungsfläche beispielhaft so gewählt, dass dieser dem halben (lateralen) Abstand d₂ zu einer Symmetrie- oder Zentralachse eines unmittelbar benachbarten Strömungskanalelements 5.1 oder eines Strömungskanalelementabschnitts entspricht. Gleichermaßen ist der Abstand d₁ der Symmetrie- oder Zentralachse jeweiliger Strömungskanalelemente 5.1 bzw.- abschnitte zu einer die Formwerkzeugkavität 4 nicht begrenzenden und dieser entsprechend abgewandten freiliegenden oberen Wandungsfläche beispielhaft so gewählt, dass dieser dem halben (lateralen) Abstand d₂ zu einer Symmetrie- oder Zentralachse eines unmittelbar benachbarten Strömungskanalelements 5.1 bzw. -abschnitts entspricht.

Wie in Fig. 10 rein schematisch angedeutet, kann der Trägerkörper 5.3, insbesondere auf der der Formwerkzeugkavität 4 abgewandten Fläche, zumindest abschnittsweise mit Ausgleichs- bzw. Homogenisierungsstrukturen 10 versehen sein, welche eingerichtet sind, eine gezielte Zuführung und/oder Abführung, gegebenenfalls auch - insbesondere im Bereich einer der Formwerkzeugkavität zugewandten Fläche des Trägerkörpers 5.3 - eine gezielte Ausbreitung bzw. Verteilung, von thermischer Energie in dem Trägerkörper 5.3, insbesondere auf der der Formwerkzeugkavität 4 zugewandten Fläche des Trägerkörpers 5.3, zu ermöglichen. Derart lässt sich, insbesondere im Bereich der der Formwerkzeugkavität 4 zugewandten Fläche des Trägerkörpers 5.3, eine örtlich und/oder zeitlich homogene Temperaturverteilung in dem Trägerkörper 5.3 und somit, insbesondere im Bereich der der Formwerkzeugkavität 4 zugewandten Fläche des Trägerkörpers 5.3, eine möglichst homogene Temperierung des Trägerkörpers 5.3 realisieren.

Entsprechende Ausgleichs- bzw. Homogenisierungsstrukturen 10 können, wie in Fig. 10 dargestellt, durch, z. B. querschnittserweiternde, Materialverstärkungen und/oder durch, z. B. querschnittsreduzierende, Materialreduzierungen in dem Trägerkörper 5.3 ausgebildet sein. Ersichtlich sind entsprechende Ausgleichs- bzw. Homogenisierungsstrukturen 10 im Bereich der der Formwerkzeugkavität 4 abgewandten Fläche des Trägerkörpers 5.3 angeordnet oder ausgebildet.

Konkret zeigt Fig. 10 beispielhaft sowohl eine Variante sinusartig- bzw. förmig ausgebildeter Ausgleichs- bzw. Homogenisierungsstrukturen 10 als auch eine Variante sägezahnartig bzw. -förmig respektive zickzackartig bzw. -förmig ausgebildeter Ausgleichs- bzw. Homogenisierungsstrukturen 10. Selbstverständlich ist es auch denkbar, dass nur sinusartig- bzw. förmig ausgebildete Ausgleichs- bzw. Homogenisierungsstrukturen 10 oder nur sägezahnartig bzw. -förmig respektive zickzackartig- bzw. förmig ausgebildete Ausgleichs- bzw. Homogenisierungsstrukturen 10 vorhanden sind. In beiden Varianten sind die durch Materialverstärkungen gebildeten Maxima der Ausgleichs- bzw. Homogenisierungsstrukturen 10 oberhalb jeweiliger Strömungskanalelemente 5.1 oder -abschnitte angeordnet und die durch Materialreduzierungen gebildeten Minima der Ausgleichs- bzw. Homogenisierungsstrukturen 10 zwischen jeweiligen Strömungskanalelementen 5.1 oder -abschnitten angeordnet.

Es ist in allen Ausführungsbeispielen denkbar, dass ein Strömungskanalelement 5.1 entlang seiner Erstreckung eine unveränderliche bzw. unveränderte oder veränderliche bzw. veränderte Querschnittsgeometrie aufweist.

Ferner ist es in allen Ausführungsbeispielen denkbar, dass ein eine Strömungskanalelement 5.1 im Bereich seiner den Strömungskanal 5.2 begrenzenden Wandungen mit einer bestimmten Oberflächenstrukturierung oder -beschichtung versehen ist, welche z. B. in besonderen Strömungseigenschaften, d. h. insbesondere in bestimmten Strömungsprofilen, Strömungsgeschwindigkeiten, etc., eines Strömungsfluids resultiert. Insbesondere ist es denkbar, dass ein Strömungskanalelement 5.1 entlang seiner Erstreckung bzw. entsprechende Wandungen des Strömungskanalelements 5.1 unveränderliche bzw. unveränderte oder veränderliche bzw. veränderte Oberflächenstrukturierungen bzw. - beschichtungen aufweist. Selbstverständlich kann auch der Trägerkörper 5.3 zumindest abschnittsweise, gegebenenfalls vollständig, mit einer bestimmten Oberflächenstrukturierung oder -beschichtung versehen sein, etwa um zusätzliche Eigenschaften, wie z. B. Anti-Korrosions-, oder Anti-Haft-Eigenschaften, etc., realisieren.

Ferner ist es in allen Ausführungsbeispielen denkbar, dass ein Strömungskanalelement 5.1 durch mehrere miteinander strömungstechnisch verbundene Strömungskanalelementsegmente (nicht gezeigt) gebildet ist. Entsprechende Strömungskanalelementsegmente können ebenso als in einer oder mehreren Raumrichtungen vordefiniert konfigurierte Gebilde vorliegen. Beispielsweise können vordefiniert konfigurierte Strömungskanalelementsegmente ohne Umformbereiche, mithin nicht umgeformte bzw. gebogene Strömungskanalelementsegmente, und vordefiniert konfigurierte Strömungskanalelementsegmente mit einem oder mehreren Umformbereichen, mithin umgeformte bzw. gebogene, Strömungskanalelementsegmente vorliegen, welche miteinander unter Ausbildung eines vordefiniert konfigurierten Strömungskanalelements 5.1 verbunden werden. Über eine Verbindung entsprechender vordefiniert konfigurierter Strömungskanalelementsegmente können nach dem Baukastenprinzip gezielt vordefiniert konfigurierte Strömungskanalelemente 5.1 zusammengestellt werden. Entsprechende Strömungskanalelementsegmente können unabhängig von ihrer jeweiligen Geometrie form- und/oder kraft- und/oder stoffschlüssig direkt oder indirekt, d. h. unter Zwischenschaltung wenigstens eines Bauteils oder einer Bauteilgruppe, insbesondere strömungstechnisch, miteinander verbunden sein. Lediglich beispielhaft wird in diesem Zusammenhang auf Pressen, Klemmen, Schrauben, Stecken, Kleben, Löten, Schweißen, verwiesen. Gegebenenfalls können Montage- oder Verbindungselemente, wie z. B. Schraubelemente, insbesondere Schneidringverschraubelemente, Pressverbinderelemente, etc., verwendet werden.

Ferner ist es in allen Ausführungsbeispielen denkbar, dass eine entsprechende Strömungskanalanordnung weitgehend gleichmäßig verteilt in dem Trägerkörper 5.3 angeordnet ist. Dies resultiert typischerweise in einer weitgehend homogenen Energieübertragung zwischen einem durch das oder die Strömungskanalelemente 5.1 strömenden Strömungsfluid und dem Trägerkörper 5.3. Es ist jedoch auch möglich, dass durch eine gezielte lokale Variation von Anzahl, Anordnung und/oder Ausrichtung entsprechender Strömungskanalelemente 5.1 gezielt eine inhomogene Energieübertragung zwischen einem durch das oder die Strömungskanalelemente 5.1 strömenden Strömungsfluid und dem Trägerkörper 5.3 realisiert wird, sodass der Trägerkörper 5.3 Bereiche aufweisen kann, welche im Vergleich zu anderen Bereichen ein erhöhtes oder reduziertes Temperiervermögen aufweisen.

Ferner ist es in allen Ausführungsbeispielen denkbar, dass einem Strömungskanalelement 5.1 eine Stützstruktur (nicht gezeigt) zugeordnet ist, welche wenigstens ein, z. B. strebenartiges bzw. -förmiges, Stützelement umfasst, welches einen Abschnitt eines jeweiligen Strömungskanalelements 5.1 in seiner räumlichen Ausrichtung, insbesondere vor dem bzw. bei einem Vergießen mit einem den Trägerkörper 5.3 bildenden Material,stützt und damit stabilisiert. Selbstverständlich kann sich ein entsprechendes Stützelement zwischen mehreren Abschnitten eines Strömungskanalelements 5.1 oder zwischen mehreren Strömungskanalelementen 5.1 erstrecken, sodass es gleichzeitig mehrere Abschnitte des wenigstens einen Strömungskanalelements oder gleichzeitig mehrere Strömungskanalelemente 5.1 stützt und stabilisiert.

Ferner ist es in allen Ausführungsbeispielen denkbar, dass der Temperiereinrichtung 5, d. h. insbesondere einem Strömungskanalelement 5.1, und/oder dem Formwerkzeugelement 2, 3 wenigstens eine Sensoreinrichtung (nicht gezeigt) zugeordnet ist, welche wenigstens ein Sensorelement zur Erfassung einer chemischen und/oder physikalischen Größe umfasst. Über ein entsprechendes Sensorelement lassen sich z. B. chemische Größen, wie z. B. die chemische Zusammensetzung eines Strömungsfluids, oder physikalische Größen, wie z. B. der Druck, die Temperatur, die Strömungsgeschwindigkeit, die Viskosität eines Strömungsfluids, erfassen. Entsprechende Sensorelemente sind zur Erzeugung von Sensorsignalen eingerichtet. Entsprechende erfasste Sensorsignale beschreibende Sensorinformationen können z. B. dazu verwendet werden, den Betrieb des Formwerkzeugs 1 oder einer übergeordneten Vorrichtung zur Herstellung eines Partikelschaumformteils zu steuern und/oder zu regeln. Insbesondere kann der Betrieb der Temperiereinrichtung 5 gesteuert und/oder geregelt werden, was z. B. durch eine Steuerung der Strömungseigenschaften des ein Strömungskanalelement 5.1 durchströmenden Strömungsfluids realisierbar ist.

Für alle Ausführungsbeispiele gilt, dass die Temperiereinrichtung 5 z. B. als Einsatzelement in das Formwerkzeugelement 2 integriert sein kann. Das Formwerkzeugelement 2 kann sonach wenigstens einen, z. B. durch eine Ausnehmung, Öffnung, etc. gebildeten, Aufnahmebereich (nicht gezeigt) zur Aufnahme eines entsprechenden Einsatzelements und somit der Temperiereinrichtung 5 aufweisen. Alternativ oder ergänzend kann das Formwerkzeugelement 2, wie etwa in Fig. 1 beispielhaft gezeigt, durch die Temperiereinrichtung 5 gebildet sein. Die Temperiereinrichtung 5, d. h. insbesondere der Trägerkörper 5.3 nebst Strömungskanalanordnung, kann sonach eine die wenigstens eine Formwerkzeugkavität 4 begrenzende Wandung des Formwerkzeugs 1 bilden.

Ein Verfahren zur Herstellung eines entsprechenden Formwerkzeugelements 2 umfasst die folgenden Schritte:
- Bereitstellen wenigstens einer Strömungskanalanordnung, welche wenigstens ein sich vordefiniert konfiguriert in wenigstens einer Raumrichtung und/oder Raumebene erstreckendes, einen von einem Strömungsfluid durchströmbaren Strömungskanal 5.2 begrenzendes Strömungskanalelement 5.1 umfasst;
- zumindest abschnittsweises, gegebenenfalls vollständiges, Einbringen der bereitgestellten Strömungskanalanordnung in ein einen Trägerkörper 5.3 bildendes Material bzw. eine einen Trägerkörper 5.3 bildende Materialstruktur unter Ausbildung der Temperiereinrichtung 5.

Bei dem Material kann es sich um ein aushärtbares bzw. gießfähiges Material handeln. Das zumindest abschnittsweise, gegebenenfalls vollständige, Einbringen der bereitgestellten Strömungskanalanordnung in ein entsprechendes aushärtbares bzw. gießfähiges Material kann z. B. durch Vergießen der Strömungskanalanordnung mit einem entsprechenden Material oder durch Eintauchen der Strömungskanalanordnung in ein entsprechendes Material erfolgen. Das Verfahren kann ferner den Schritt des Durchführens wenigstens einer Maßnahme zum chemischen und/oder physikalischen Aushärten bzw. Erstarren des entsprechenden Materials unter Ausbildung der Temperiereinrichtung 5 umfassen.

Das Material bzw. die Materialstruktur, in welches die Strömungskanalanordnung eingebracht wird, kann, wie erwähnt, ein thermisch leitfähiges Material, vorzugsweise ein Metall, sein. Wie ebenso erwähnt, kommen insbesondere gießfähige Metalle, wie z. B. Aluminium oder Kupfer in Betracht.

Mit dem in den Fig. gezeigten Ausführungsbeispielen dargestellten Formwerkzeugen 1 lässt sich ein Verfahren zur Verarbeitung von Kunststoffpartikelmaterial zur Herstellung eines, insbesondere dickwandigen bzw. großvolumigen, Partikelschaumformteils, implementieren. Das Verfahren umfasst die Schritte:
- Einbringen wenigstens eines Kunststoffpartikelmaterials in die Werkzeugkavität 4 des Formwerkzeugs 1,
- Durchführen wenigstens einer einen Verbindungsvorgang des Kunststoffpartikelmaterials herbeiführenden Maßnahme, insbesondere durch, bevorzugt dampffreies bzw. dampfloses, Einbringen von thermischer Energie in das Kunststoffpartikelmaterial bzw. in die Werkzeugkavität 4, unter Ausbildung eines Partikelschaumformteils,
- Entnehmen des Partikelschaumformteils aus der Werkzeugkavität 4.

Einzelne, mehrere oder sämtliche im Zusammenhang mit einem bestimmten Ausführungsbeispiel beschriebene Merkmale lassen sich mit einzelnen, mehreren oder sämtlichen im Zusammenhang mit wenigstens einem anderen Ausführungsbeispiel beschriebenen Merkmalen kombinieren.

## Patentansprüche

1. Formwerkzeug (1) zur Herstellung eines Partikelschaumformteils, umfassend:
- wenigstens ein eine Formwerkzeugkavität (4) des Formwerkzeugs (1) begrenzendes Formwerkzeugelement (2, 3),
- eine Temperiereinrichtung (5) zur Temperierung des wenigstens einen Formwerkzeugelements (2, 3), **dadurch gekennzeichnet, dass**
die Temperiereinrichtung (5) eine Strömungskanalanordnung umfasst, welche wenigstens ein sich, insbesondere durch einen Umformvorgang, vordefiniert konfiguriert in wenigstens einer Raumrichtung und/oder Raumebene erstreckendes, einen von einem Strömungsfluid durchströmbaren Strömungskanal (5.2) begrenzendes Strömungskanalelement (5.1) umfasst, wobei das wenigstens eine Strömungskanalelement (5.1) zumindest abschnittsweise, gegebenenfalls vollständig, in einem Trägerkörper (5.3) angeordnet ist.

2. Formwerkzeug nach Anspruch 1, **dadurch gekennzeichnet, dass** das wenigstens eine Strömungskanalelement (5.1) als ein in wenigstens eine Raumrichtung und/oder Raumebene vordefiniert konfiguriert gebogenes Rohr- oder Schlauchelement ausgebildet ist oder ein solches umfasst.

3. Formwerkzeug nach einem der vorhergehenden Ansprüche, **dadurch gekennzeichnet, dass** das wenigstens eine Strömungskanalelement (5.1) aus einem Metallrohr, insbesondere einem Rohr aus einem Eisen-basierten Metall, vorzugsweise Stahl, oder einem Kunststoffrohr gebildet ist.

4. Formwerkzeug nach einem der vorhergehenden Ansprüche, **dadurch gekennzeichnet, dass** der Trägerkörper (5.3) aus einem gießfähigen Material und/oder durch Vergießen eines gießfähigen Materials gebildet ist.

5. Formwerkzeug nach einem der vorhergehenden Ansprüche, **dadurch gekennzeichnet, dass** der Trägerkörper (5.3) aus einem thermisch leitfähigen Material gebildet ist oder ein solches umfasst, wobei der Trägerkörper (5.3) insbesondere aus einem Metall, insbesondere einem Leichtmetall, vorzugsweise aus Aluminium oder Kupfer, gebildet ist.

6. Formwerkzeug nach einem der vorhergehenden Ansprüche, **dadurch gekennzeichnet, dass** das wenigstens eine Strömungskanalelement (5.1), insbesondere direkt, unterhalb einer eine Wirkfläche der Temperiereinrichtung (5) angeordnet oder ausgebildet ist.

7. Formwerkzeug nach einem der vorhergehenden Ansprüche, **dadurch gekennzeichnet, dass** das wenigstens eine Strömungskanalelement (5.1), insbesondere im Bereich eines freien Endes, wenigstens einen Ausströmabschnitt oder -bereich (5.1.1) umfasst, über welchen ein Strömungsfluid aus dem durch das wenigstens eine Strömungskanalelement (5.1) begrenzten Strömungskanal (5.2) austreten kann, und/oder wenigstens einen Zuströmabschnitt oder -bereich (5.1.2) umfasst, über welchen ein Strömungsfluid in den durch das wenigstens eine Strömungskanalelement (5.1) begrenzten Strömungskanal (5.2) eintreten kann, wobei optional
das wenigstens eine Strömungskanalelement (5.1), insbesondere im Bereich eines freien Endes, wenigstens einen Ausströmabschnitt oder - bereich (5.1.1) umfasst, über welchen ein Strömungsfluid aus dem durch das wenigstens eine Strömungskanalelement (5.1) begrenzten Strömungskanal (5.2) austreten kann, und/oder wenigstens einen Zuströmabschnitt oder -bereich (5.1.2) umfasst, über welchen ein Strömungsfluid in den durch das wenigstens eine Strömungskanalelement (5.1) begrenzten Strömungskanal (5.2) eintreten kann, wobei der wenigstens eine Ausströmabschnitt oder -bereich (5.1.1) und der wenigstens eine Zuströmabschnitt oder -bereich (5.1.2) an gleichen Seiten des wenigstens einen Formwerkzeugelements (2, 3) angeordnet oder ausgebildet sind.

8. Formwerkzeug nach Anspruch 7, **dadurch gekennzeichnet, dass** der wenigstens eine Ausströmabschnitt oder -bereich (5.1.1) und/oder der wenigstens eine Zuströmabschnitt oder -bereich (5.1.2) an einem sich außerhalb oder innerhalb des wenigstens einen Trägerkörpers (5.3) erstreckenden Abschnitt des wenigstens einen Strömungskanalelements (5.1) angeordnet oder ausgebildet ist.

9. Formwerkzeug nach einem der vorhergehenden Ansprüche, **dadurch gekennzeichnet, dass** die Strömungskanalanordnung mehrere Strömungskanalelemente (5.1) umfasst, wobei wenigstens zwei Strömungskanalelemente (5.1), insbesondere unter Ausbildung einer gemeinsamen Strömungskanalstruktur, miteinander über wenigstens einen Verbindungsbereich strömungstechnisch kommunizieren, oder wenigstens zwei Strömungskanalelemente (5.1), insbesondere unter Ausbildung getrennter Strömungskanalstrukturen, nicht miteinander über wenigstens einen Verbindungsbereich strömungstechnisch kommunizieren.

10. Formwerkzeug nach einem der vorhergehenden Ansprüche, **dadurch gekennzeichnet, dass** die Temperiereinrichtung (5), insbesondere, als Einsatzelement, in das wenigstens eine Formwerkzeugelement (2, 3) integriert ist.

11. Formwerkzeug nach einem der vorhergehenden Ansprüche, **dadurch gekennzeichnet, dass** das wenigstens eine Formwerkzeugelement (2, 3) durch die Temperiereinrichtung (5) gebildet ist.

12. Formwerkzeug nach einem der vorhergehenden Ansprüche, **dadurch gekennzeichnet, dass** zwischen dem Trägerkörper (5.3) und dem wenigstens einen Strömungskanalelement (5.1) ein thermisch leitfähiger Kontakt besteht.

13. Formwerkzeug nach einem der vorhergehenden Ansprüche, **dadurch gekennzeichnet, dass** das wenigstens eine Strömungskanalelement (5.1) so angeordnet ist, dass eine homogene Temperierung des Trägerkörpers (5.3), insbesondere auf einer der Formwerkzeugkavität (4) zugewandten Fläche, erfolgt.

14. Formwerkzeug nach einem der vorhergehenden Ansprüche, **dadurch gekennzeichnet, dass** der Trägerkörper (5.3) zumindest abschnittsweise mit Ausgleichs- bzw. Homogenisierungsstrukturen (10) versehen ist, welche eingerichtet sind, insbesondere im Hinblick auf eine gegebene räumliche Erstreckung des wenigstens einen Strömungskanalelements (5.1) in dem Trägerkörper (5.3), eine gezielte Zuführung und/oder Abführung von thermischer Energie in dem und/oder aus dem Trägerkörper (5.3), insbesondere auf einer der Formwerkzeugkavität (4) zugewandten Fläche, zu ermöglichen.

15. Formwerkzeug nach einem der vorhergehenden Ansprüche, **dadurch gekennzeichnet, dass** mehrere Strömungskanalelemente (5.1), insbesondere gitterartig bzw. -förmig, in einer parallel oder winklig zueinander ausgerichteten Anordnung angeordnet sind.

16. Temperiereinrichtung (5) für ein Formwerkzeug (1) zur Herstellung eines Partikelschaumformteils, insbesondere für ein Formwerkzeugelement (1) nach einem der vorhergehenden Ansprüche, **gekennzeichnet durch** eine Strömungskanalanordnung, welche wenigstens ein sich, insbesondere durch einen Umformvorgang, vordefiniert konfiguriert in wenigstens einer Raumrichtung und/oder Raumebene erstreckendes, einen von einem Strömungsfluid durchströmbaren Strömungskanal (5.2) begrenzendes Strömungskanalelement (5.1) umfasst, wobei das wenigstens eine Strömungskanalelement (5.1) zumindest abschnittsweise, gegebenenfalls vollständig, in einem Trägerkörper (5.3) angeordnet ist.

17. Verfahren zur Herstellung einer Temperiereinrichtung (5) für ein Formwerkzeug (2, 3) zur Herstellung eines Partikelschaumformteils, welche Temperiereinrichtung (5) eine Strömungskanalanordnung umfasst, welche wenigstens ein sich vordefiniert konfiguriert in wenigstens einer Raumrichtung und/oder Raumebene erstreckendes, einen von einem Strömungsfluid durchströmbaren Strömungskanal (5.2) begrenzendes Strömungskanalelement (5.1) umfasst, wobei das wenigstens eine Strömungskanalelement (5.1) zumindest abschnittsweise, gegebenenfalls vollständig, in einem Trägerkörper (5.3) angeordnet ist, **gekennzeichnet durch** die folgenden Schritte:
- Bereitstellen wenigstens einer eine Strömungskanalanordnung, welche wenigstens ein sich vordefiniert konfiguriert in wenigstens einer Raumrichtung und/oder Raumebene erstreckenden, einen von einem Strömungsfluid durchströmbaren Strömungskanal (5.2) begrenzendes Strömungskanalelement (5.1) umfasst;
- Einbringen der bereitgestellten Strömungskanalanordnung in ein einen Trägerkörper (5.3) bildendes Material oder in eine einen Trägerkörper (5.3) bildende Materialstruktur.
